(19) Europäisches Patentamt / European Patent Office / Office européen des brevets

(11) **EP 3 034 202 B1**

(12) **EUROPEAN PATENT SPECIFICATION**

(45) Date of publication and mention of the grant of the patent:
**23.05.2018 Bulletin 2018/21**

(21) Application number: **14836934.1**

(22) Date of filing: **12.08.2014**

(51) Int Cl.:
***B22F 1/02*** (2006.01) ***B22F 9/00*** (2006.01)
***H01B 1/00*** (2006.01) ***H01B 1/22*** (2006.01)
***H01B 13/00*** (2006.01) ***H01G 4/00*** (2006.01)
***H01G 4/232*** (2006.01) ***H01G 4/30*** (2006.01)
***B22F 1/00*** (2006.01) ***H01G 4/008*** (2006.01)
***C09D 5/24*** (2006.01) ***B22F 7/00*** (2006.01)
*H01G 4/12* (2006.01)

(86) International application number:
**PCT/JP2014/071340**

(87) International publication number:
**WO 2015/022970 (19.02.2015 Gazette 2015/07)**

(54) **METAL POWDER PASTE AND METHOD FOR PRODUCING SAME**

METALLPULVERPASTE UND VERFAHREN ZUR HERSTELLUNG DAVON

PÂTE DE POUDRE MÉTALLIQUE ET PROCÉDÉ DE FABRICATION DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2013 JP 2013168386**

(43) Date of publication of application:
**22.06.2016 Bulletin 2016/25**

(73) Proprietor: **JX Nippon Mining & Metals Corporation**
**Tokyo 100-8164 (JP)**

(72) Inventor: **FURUSAWA,Hideki**
**Hitachi-shi**
**Ibaraki 317-0056 (JP)**

(74) Representative: **Gill, Stephen Charles et al**
**Mewburn Ellis LLP**
**City Tower**
**40 Basinghall Street**
**London EC2V 5DE (GB)**

(56) References cited:
**EP-A1- 2 130 627** **JP-A- H04 190 502**
**JP-A- H04 214 770** **JP-A- H07 197 103**
**JP-A- 2001 059 101** **JP-A- 2006 097 123**
**JP-A- 2007 126 750** **JP-A- 2007 197 752**
**JP-A- 2009 074 171** **JP-A- 2011 032 558**
**JP-A- 2013 147 678** **US-A1- 2012 048 426**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a metal powder paste suitably usable for producing electrodes for multilayer ceramic capacitors (chip laminated ceramic capacitors) and excellent in sintering delay property, and a method for producing the metal powder paste.

### Background Art

A chip laminated ceramic capacitor has a structure in which ceramic dielectrics and internal electrodes are laminated in a layered form, the laminated layers each constitute a capacitor element, these elements are connected to each other in parallel by external electrodes, and thus, these elements, as a whole, form a miniature large-capacity capacitor.

In the production of the chip laminated ceramic capacitor, a dielectric sheet is produced as follows. Specifically, first, an organic binder and a solvent are added to a dielectric raw material powder of $BaTiO_3$ or the like, and the resulting mixture is subjected to steps of pulverization, mixing and defoaming, and thus a slurry is obtained. Subsequently, by using an application method such as a method using a die coater, the slurry is applied on a carrier film such as a PET film, in a thinly extended form. The resulting film is dried to obtain a thin dielectric sheet (green sheet).

On the other hand, in the same manner as in the case of the dielectric raw material powder, the metal powder as a raw material for the internal electrodes of the chip laminated ceramic capacitor is subjected to a step of mixing with a dispersant, an organic binder as a molding aid and a solvent into a slurry, and a step of defoaming, and thus the metal powder is converted into a slurry. By using the resulting slurry, an internal electrode is printed on the green sheet (dielectric sheet) mainly with a screen printing method, the printed electrode is dried, then the printed green sheet is peeled from the carrier film, and a large number of such green sheets are laminated on each other.

A few tens to a few hundreds MPa of press pressure is applied to the laminated green sheets to integrate the green sheets into one body, and then the body is cut into individual chips. Subsequently, in a firing furnace, the internal electrode layers and the dielectric layers are sintered at a high temperature at around 1000°C. In this way, chip laminated ceramic capacitors are produced.

In the internal electrodes of the chip laminated ceramic capacitors, various metals have been used from the viewpoint of the cost and the viewpoint of the environmental regulation; additionally, with miniaturization of capacitors, the internal electrodes tend to be thin layers, and the particle size of the powder for the internal electrodes is desired to be further smaller.

However, the achievement of a smaller size of particles makes the melting point lower, and the melting of the metal powder starts at a lower temperature during firing to induce the occurrence of cracks in the electrode layers themselves. In addition, because the electrode layers rapidly contract after lowering of the temperature, there is a possibility that the detachment (delamination) between the dielectric layers and the electrode layers occurs, and hence the metal powder for the internal electrodes is demanded to have a thermal contraction property equivalent to the thermal contraction property of the dielectric. As an index representing this equivalence, the sintering initiation temperature is quoted.

In response to such a demand, there have been proposed: a method in which a dielectric particle or a glass frit is added to a paste to reduce the mutual contact points between Cu powder particles; and a method in which a surface treatment is applied to a Cu powder in order to obtain a Cu powder appropriate for the internal electrodes of chip laminated ceramic capacitors.

When a dielectric particle or a glass frit is added to the paste, unless the particle or the frit is smaller than the Cu powder particle, the particle or the frit causes resistance in the electrically conductive layers after sintering, and the electrically conductive layers are degraded in the function as the electrodes. Accordingly, the dielectric particle or the glass frit is required to be smaller than the Cu powder particle. When the size of the Cu powder particle itself is 0.1μm, the size of the dielectric particle or the glass frit is required to be a few tens nanometers. Consequently, the handling of the dielectric particle or the glass frit becomes difficult to result in the rise of the raw material cost of the paste.

Patent Literature 1 (Japanese Patent No. 4001438) discloses a technique in which a Cu powder is dispersed in a liquid, an aqueous solution of a water-soluble salt of a metal element is added to the resulting dispersion liquid, the pH of the resulting mixture is regulated to fix the metal oxide to the surface of the Cu powder particles, and the surface-treated Cu powder particles are allowed to collide with each other to reinforce the fixation of the surface-treatment layer (the layer formed by surface treatment). However, the step concerned is constituted with the adsorption of the metal oxide to the copper powder particles and the reinforcement of the fixation of the metal oxide to the copper powder particles, and hence there is a problem with respect to the productivity. In addition, when the particle size of the copper powder is further smaller than 0.5 μm, the particle size of the copper powder approaches the particle size of the metal

oxide to be adsorbed, and hence it is anticipated that the adsorption itself of the oxide to the copper powder will become difficult.

Patent Literature 2 (Japanese Patent No. 4164009) discloses a technique in which the copper powder particles are coated with a silicone oil having a specific functional group. However, because the oil and the Cu powder are mixed with each other, the Cu powder tends to aggregate, and hence there is a problem with respect to the operability. The filtration during the separation of the oil and the Cu powder from each other is difficult, and hence there is also a problem with respect to the operability.

Patent Literature 3 (Japanese Patent No. 3646259) discloses a technique in which an alkoxysilane hydrolyzed on the surface of the copper power particles is allowed to be condensation-polymerized with an ammonia catalyst, and thus a $SiO_2$ gel coating film is formed on the surface of the copper powder particles. However, when this technique is applied to a copper powder having a particle size of 1μm or less, $NH_3$ as the catalyst is required to be continuously added so as to prevent the aggregation, but the reaction control is extremely difficult because the reaction control depends on the degree of the specific operational skill of the addition, and hence there is a problem with respect to the operability and the productivity.

Patent Literature 4 (Japanese Patent Laid-Open No. 2012-140661) discloses a technique in which by adding a water-soluble silicic acid to the reaction system when $Cu^{2+}$ is reduced with hydrazine or the like in the process of the production of a Cu powder, the silicic acid is allowed to be incorporated into the inside of the Cu powder particles, and additionally to be adsorbed on the surface of the Cu powder particles. Although the silicic acid improves the sintering delay property, because the shape of the Cu powder particles is flat, it is highly possible that the surface of the electrodes is not allowed to be flat but is allowed to be rich in asperities. Because the asperities are conspicuous when the thickness of the electrode layer is thin, this technique is in principle not suitable for capacitors aiming at higher capacities by making thin the electrode layers and thereby increasing the number of the laminated layers. In addition, in the copper electrodes obtained by forming the internal electrodes by using a paste made of the copper powder containing a silicate in the inside of the particles thereof, it is highly possible that Si is solid-dissolved in Cu. This is because the firing of the internal electrodes is usually performed in a reducing atmosphere. Consequently, such electrodes are low in electrical conductivity, the function of electric conduction required for electrodes is possibly degraded.

Patent Literature 5 (Japanese Patent No. 3646259) discloses a technique in which an organic substance treatment is applied to a copper powder composed of flaky, flat and relatively large particles having a D50 value of 0.3 to 7 μm. The organic substance treatment is described to include a silane coupling agent, but only general types are quoted; what types of silane coupling agent and the treatment method with the silane coupling agent are not specifically described, and no embodiment is described. This technique is a technique to treat a copper powder composed of relatively large and flaky copper particles, and accordingly this technique cannot cope with the case where the shape of the copper powder particles is spherical, or close to a spherical shape, or a high-temperature sinterability is also required to be improved.

Patent Literature 6 (Japanese Patent No. 4588688) discloses a technique in which an amino group-containing silane is used as a silane coupling agent to coat the particles of a nickel powder through the intermediary of a nickel complex ion, and a silica layer is formed by a heat treatment. In this technique, the aminosilane is allowed to be present in the reaction system from the pulverization process of the nickel powder, and thus the aminosilane is incorporated not only on the surface of the particles of the nickel powder but also in the inside of the particles of the nickel powder. When the internal electrode patterns formed of a nickel powder having such a constitution are fired in a reducing atmosphere, Si is solid-dissolved in Ni, and hence there is a possibility that the electrical conductivity of the electrodes is degraded. In addition, when an aminosilane is present in the pulverization reaction system, there is a possibility that the shape of the nickel powder particles becomes flat. This offers a possibility that the formation of thin layers of the internal electrodes is disturbed. Moreover, in the step of forming a silica layer by firing the powder, there is a high possibility that silica layers are formed between the nickel powder particles. In this case, the formation of the silica layers results in the aggregation of the nickel powder particles, to disturb the formation of the thin layers of the internal electrodes. In addition, when the silica layers are beforehand formed, in the kneading process of the paste, in particular, in the case where a triple roll mill to disintegrate the aggregation by shear stress is used, there is a possibility that the nickel powder particles coated with a silica layer are brought into contact with each other, and the carefully formed silica layers are broken.

Patent Literature 7 (Japanese Patent No. 4356323) discloses a method for producing a surface-treated nickel powder, including: a step of surface-treating a nickel powder with a surface-treating agent selected from a polyhydric alcohol, a silane coupling agent and an alkanolamine in order to prevent the aggregation of the nickel powder; a step of heating the nickel powder at 100 to 300°C; and a step of pulverizing the heat treated nickel powder with a jet mill. In the same manner as in Patent Literature 6, in the step of forming the silica layer by firing the powder based on the heat treatment, there is a high possibility that silica layers are formed between the nickel powder particles. In this case, the formation of the silica layers results in the aggregation of the nickel powder particles, to disturb the formation of the thin layers of the internal electrodes.

Patent Literature 8 (Japanese Patent Laid-Open No. H07-197103) discloses a technique in which a metal

powder, an organic resinate and an organic solvent are mixed with a mixed dispersion medium, and then the organic solvent is evaporated to obtain a surface-treated metal powder, in order to improve the sintering delay property of the metal powder. As described in this Patent Literature, this method involves a long mixing time and a long time required for the evaporation step of the organic solvent, and hence is not suitable for an industrial implementation from the viewpoint of productivity.

Patent Literature 9 (Japanese Patent Laid-Open No. H04-28109) discloses a technique for improving the solderability of the electrodes obtained by adding a coupling agent in a paste and by passing through a sintering step. However, this technique offers an insufficient improvement of the sintering initiation delay. Patent Literature 10 (JP 2001 059101 A) discloses a method of producing a surface coated nickel powder with sintering delay property. The surface coating of Ni contains aqueous dispersions of titanate coupling agents (KR-ET or KR-44), with a coverage in relation to covered nickel of 200 - 2000 ppm.

Patent Literature 11 (EP 2 130 627 A1) relates to production of bimetallic core-shell particles, but does not show a production of metal powder for MLCCs.

Citation List

Patent Literature

Patent Literature 1: Japanese Patent No. 4001438
Patent Literature 2: Japanese Patent No. 4164009
Patent Literature 3: Japanese Patent No. 3646259
Patent Literature 4: Japanese Patent Laid-Open No. 2012-140661
Patent Literature 5: Japanese Patent No. 3646259
Patent Literature 6: Japanese Patent No. 4588688
Patent Literature 7: Japanese Patent No. 4356323
Patent Literature 8: Japanese Patent Laid-Open No. H07-197103
Patent Literature 9: Japanese Patent Laid-Open No. H04-Patent Literature 10: Japanese Patent laid-Open No. 2001 059101
Patent Literature 11: European Patent application No. EP 2 130 627 A1

Summary of Invention

Technical Problem

As described above, there have been demanded metal powder pastes suitably usable for producing internal electrodes for multilayer ceramic capacitors (chip laminated ceramic capacitors), excellent in sintering delay property, operability and productivity. Accordingly, an object of the present invention is to provide a metal powder paste suitably usable for producing for multilayer ceramic capacitors (chip laminated ceramic capacitors) and excellent in sintering delay property, and a method for producing the metal powder paste.

Solution to Problem

The present inventor made a diligent study, and consequently has reached the present invention by discovering that as described below, a metal powder and an aqueous solution of an amino group-containing coupling agent are mixed with each other, to allow the amino group-containing coupling agent to be adsorbed on the surface of the metal powder, then the metal powder is washed with an aqueous solvent, and thus there can be obtained a metal powder paste free from the aggregation after the surface treatment, excellent in operability and productivity, and drastically improved in sintering delay property. The metal powder paste based on the surface-treated metal powder provides an extremely flattened paste coating film formed by applying the metal powder paste, and thus is particularly advantageous for achieving thin layer electrodes for multilayer ceramic capacitors (chip laminated ceramic capacitors).

Moreover, the metal powder paste was obtained by mixing a carboxyl group- or amino group-containing organic compound as a dispersant when the surface-treated metal powder was dispersed in a solvent; the mixing of the dispersant extremely reduced the aggregation of the surface-treated metal powder.

Accordingly, the following (1) to (29) are disclosed.

(1) A metal powder paste, wherein the deposition amount of any one or more of Si, Ti, Al, Zr, Ce and Sn is 100 to

1000 μg in relation to 1 g of the metal powder, and the weight percentage of N is 0.02% or more in relation to the metal powder; and
a surface-treated metal powder having a D50 value of 0.5 μm or less and a Dmax value of 1.0 μm or less is included as dispersed in a solvent.
(2) The metal powder paste according to (1) wherein the surface-treated metal powder and a carboxyl group- or amino group-containing organic compound are included as dispersed in a solvent.
(3) The metal powder paste according to (1) or (2) wherein in addition to the surface-treated metal powder and the carboxyl group- or amino group-containing organic compound, a binder resin is included as dispersed in a solvent.
(4) The metal powder paste according to any one of (1) to (3) wherein the metal powder is a metal powder of any of Pt, Pd, Au, Ag, Ni and Cu.
(5) The metal powder paste according to any one of (1) to (3) wherein the metal powder is a metal powder of any of Ag, Ni and Cu.
(6) The metal powder paste according to any of (1) to (5) wherein any one or more of Si, Ti, Al, Zr, Ce and Sn are Si, Ti, Al and Zr.
(7) The metal powder paste according to any one of (1) to (6) wherein the surface-treated metal powder is a metal powder surface-treated with an amino group-containing coupling agent.
(8) The metal powder paste according to any one of (1) to (7) wherein the amino group-containing coupling agent is one or more coupling agents selected from the group consisting of an aminosilane, an amino-containing titanate and an amino-containing aluminate.
(9) The metal powder paste according to any one of (2) to (8) wherein the carboxyl group-containing organic compound is a carboxylic acid or an amino acid.
(10) The metal powder paste according to any one of (2) to (9) wherein the carboxyl group-containing organic compound is a saturated or unsaturated fatty acid.
(11) The metal powder paste according to (10) wherein the fatty acid is a C3-C24 fatty acid having 0 to 2 double bonds.
(12) The metal powder paste according to (10) wherein the fatty acid is one or more selected from the group consisting of crotonic acid, acrylic acid, methacrylic acid, caprylic acid, pelargonic acid, capric acid, lauric acid, myristic acid, pentadecylic acid, palmitic acid, palmitoleic acid, margaric acid, stearic acid, oleic acid, vaccenic acid, linoleic acid, (9,12,15)-linolenic acid, (6,9,12)-linolenic acid, dihomo-γ-linolenic acid, eleostearic acid, tuberculostearic acid, arachidic acid (eicosanoic acid), 8,11-eicosadienoic acid, 5,8,11-eicosatrienoic acid, arachidonic acid, behenic acid, lignoceric acid, nervonic acid, elaidic acid, erucic acid, docosahexaenoic acid, eicosapentaenoic acid and stearidonic acid.
(13) The metal powder paste according to any one of (2) to (12) wherein the amino group-containing organic compound is a saturated or unsaturated aliphatic amine.
(14) The metal powder paste according to (13) wherein the aliphatic amine is a C3-C24 amine having 0 to 2 double bonds.
(15) The metal powder according to (13) wherein the aliphatic amine is one or more selected from the group consisting of caprylamine, laurylamine, myristylamine, pentadecylamine, palmitylamine, palmitoleylamine, margarylamine, stearylamine, oleylamine, vaccenylamine, linoleylamine, (9,12,15)-linoleylamine, (6,9,12)-linoleylamine, dihomo-γ-linoleylamine, eleostearylamine, tuberculostearylamine, arachidylamine (eicosylamine), 8,11-eicosadienylamine, 5,8,11-eicosatrienylamine, arachidonylamine, behenylamine, lignocerylamine, nervonylamine, elaidylamine, erucylamine, docosahexaenylamine, eicosapentaenylamine and stearidonylamine.
(16) The metal powder paste according to any one of (1) to (15) wherein the solvent is an alcohol solvent, a glycol ether solvent, an acetate solvent, a ketone solvent or a hydrocarbon solvent.
(17) The metal powder paste according to any one of (11) to (16) wherein the mass ratio of the fatty acid or the aliphatic amine to the surface-treated metal powder (fatty acid or aliphatic amine/surface-treated metal powder) falls within a range from 1/2000 to 1/50.
(18) The metal powder paste according to any one of (11) to (16) wherein the mass ratio of the fatty acid or the aliphatic amine to the solvent (fatty acid or aliphatic amine/solvent) falls within a range from 1/2000 to 1/50.
(19) The metal powder paste according to any one of (1) to (18) wherein a filtration under a reduced pressure of 0.3 atm performed with a filter having a pore size of 5 μm and an effective area of 9.0 $cm^2$ results in the percentage (permeability), amounting to 35% or more, of the proportion of the mass of the metal powder paste permeating the filter in 30 seconds in relation to 4 g of the mass of the placed metal powder paste.
(20) The metal powder paste according to any one of (1) to (19) wherein a coating film is formed with the metal powder paste so as to have a thickness of 1 to 20 μm after drying, and the ratio Rz/Dmax of the surface roughness Rz of the dried coating film to the Dmax of the metal powder is 10 or less.
(21) The metal powder paste according to any one of (1) to (20) wherein a coating film is formed with the metal powder paste so as to have a thickness of 1 to 20 μm after drying, and the ratio Rz/Dmax of the surface roughness Rz of the dried coating film to the Dmax of the metal powder is 5 or less.

(22) The metal powder paste according to any one of (1) to (21) wherein a coating film is formed with the metal powder paste so as to have a thickness of 1 to 20 μm after drying, and the surface roughness Rz of the dried coating film is 1 μm or less.

(23) The metal powder paste according to any one of (1) to (22) wherein the sintering initiation temperature of the surface-treated metal powder is 500°C or higher.

(24) The metal powder paste according to any one of (1) to (23), wherein
in the surface-treated metal powder,
by the multiplex measurement of XPS for the surface-treated metal powder, the photoelectrons of N are detected at 100 cps (counts per second) or more, and the photoelectrons of one element A selected from the group consisting of Al, Si, Ti, Zr, Ce and Sn are detected at 100 cps or more; and
the concentration x(atomic%) of the one element A selected from the group consisting of Al, Si, Ti, Zr, Ce and Sn, quantitatively determined by the multiplex measurement of XPS for the surface-treated metal powder and the sintering initiation temperature y(°C) of the surface-treated metal powder satisfy the following formula:

$$130x + 580 \leq y$$

(wherein, the concentration x(atomic%) is the value of the concentration representing, on the basis of percentage(%), the quantitatively determined value of the one element A selected from the group consisting of Al, Si, Ti, Zr, Ce and Sn in relation to the values quantitatively determined by the multiplex measurement of XPS of the five elements, namely, the one element A selected from the group consisting of Al, Si, Ti, Zr, Ce and Sn, the element B of the metal of the metal powder, N(nitrogen), C(carbon) and O(oxygen)).

(25) The metal powder paste according to any one of (1) to (23), wherein
in the surface-treated metal powder,
the surface of the metal powder is provided with a surface-treatment layer (the layer formed by surface treatment) including one element selected from the group consisting of Al, Si, Ti, Zr, Ce and Sn; and
when in the concentration profile of the EDS in the vicinity of the surface obtained by STEM, the thickness of the surface-treatment layer (the layer formed by surface treatment) including one element selected from the group consisting of Al, Si, Ti, Zr, Ce and Sn is represented by x(nm) and the sintering initiation temperature of the metal powder is represented by y(°C), the following formulas are satisfied:

$$0.5 \leq x \leq 10$$

$$25x + 620 \leq y$$

(26) The metal powder paste according to any one of (1) to (23), wherein
in the surface-treated metal powder,
the weight percentage of N(nitrogen) in relation to the surface-treated metal powder is 0.02% or more; and
when the deposition amount of the one element selected from the group consisting of Al, Si, Ti, Zr, Ce and Sn in relation to 1 g of the metal powder is represented by x(μg), and the sintering initiation temperature is represented by y(°C), the following formulas are satisfied:

$$50 \leq x \leq 1500$$

$$y \geq 0.2x + 600$$

(27) A multilayer ceramic capacitor (chip laminated ceramic capacitor) produced by using the paste according to any one of (1) to (26).

(28) The multilayer ceramic capacitor (chip laminated ceramic capacitor) according to (27) wherein in the cross sections of internal electrodes, particles of 10 nm or more in diameter of any of $SiO_2$, $TiO_2$ and $Al_2O_3$ are present.

(29) The multilayer ceramic capacitor (chip laminated ceramic capacitor) according to (27) or (28) wherein in the cross sections of the internal electrodes, particles of 0.5 μm or more in maximum diameter of any of $SiO_2$, $TiO_2$ and $Al_2O_3$ are present in a number density of 0.5 particle/$cm^2$ or less.

Moreover, the following (31) to (49) are disclosed.

(31) A method for producing a metal powder paste according to the present invention is provided in claim 1.

(32) The method according to (31) wherein the step of preparing a paste is a step of preparing a paste by dispersing in a solvent a binder resin in addition to the surface-treated metal powder, and the carboxyl group- or amino group-containing organic compound.

(33) The method according to (31) or (32) wherein the carboxyl group-containing organic compound is a fatty acid or an amino acid.

(34) The method according to (31) or (32) wherein the amino group-containing organic compound is an aliphatic amine.

(35) A method for screen printing on a green sheet the metal powder paste produced by the production method according to any one of (31) to (34) after filtering the paste with a filter.

(36) The method according to (35) wherein the filter has a pore size of 1 to 8 $\mu$m.

(37) The method according to (35) or (36) wherein the step of filtering with a filter is performed by a filtration under a reduced pressure or a filtration under a pressurized pressure.

(38) The method according to any one of (31) to (37) wherein the surface-treated metal powder is a surface treated metal powder produced by a method for producing a surface-treated metal powder, including:

a step of preparing a metal powder dispersion liquid by mixing a metal powder with an aqueous solution of an amino group-containing coupling agent;
a step of collecting as a residue the metal powder from the metal powder dispersion liquid; and
a step of washing the metal powder collected as a residue with an aqueous solvent.

(39) The method according to (38) including,
after the step of washing the metal powder collected as a residue with an aqueous solvent,
a step of obtaining a surface-treated metal powder by drying the washed powder.

(40) The method according to (38) or (39) wherein the step of washing the collected metal powder as a residue with an aqueous solvent is a step of washing the metal powder collected as a residue with an aqueous solvent until the concentration of one element selected from the group consisting of Si, Ti, Al, Zr, Ce and Sn reached 50ppm or less, detected by ICP analysis, in the filtrate obtained after adding an aqueous solvent having a mass five times the dry mass of the metal powder after washing.

(41) The method according to any one of (38) to (40), including a step of stirring the prepared metal powder dispersion liquid.

(42) The method according to any one of (38) to (41), including a step of performing an ultrasonic treatment of the prepared metal powder dispersion liquid for 1 to 180 minutes.

(43) The method according to any one of (38) to (42) wherein the drying is performed in an oxygen atmosphere or an inert atmosphere.

(44) The method according to any one of (38) to (43) wherein the metal powder dispersion liquid includes 0.025 g or more of an amino group-containing coupling agent in relation to 1 g of the metal powder.

(45) The method according to any one of (38) to (44) wherein the aqueous solution of the amino group-containing coupling agent is an aqueous solution of an aminosilane represented by the following formula I:

$$H_2N\text{-}R^1\text{-}Si(OR^2)_2(R^3) \qquad \text{(Formula I)}$$

(wherein, in the formula I,
$R^1$ is a C1-C12 hydrocarbon divalent group being linear or branched, saturated or unsaturated, substituted or unsubstituted, cyclic or acyclic, and having a heterocycle or no heterocycle,
$R^2$ is a C1-C5 alkyl group, and
$R^3$ is a C1-C5 alkyl group, or a C1-C5 alkoxy group.)

(46) The method according to (45) wherein $R^1$ is a group selected from the group consisting of $-(CH_2)_n-$, $-(CH_2)_n-(CH)_m-(CH_2)_{j-1}-$, $-(CH_2)_n-(CC)-(CH_2)_{n-1}-$, $-(CH_2)_n-NH-(CH_2)_m-$, $(CH_2)_n-NH-(CH_2)_m-NH-(CH_2)_j-$, $-(CH_2)_{n-1}-(CH)NH_2-(CH_2)_{m-1}-$, $-(CH_2)_{n-1}-(CH)NH_2-(CH_2)_{m-1}-NH-(CH_2)_j-$, $-CO-NH-(CH_2)_n-$, and $-CO-NH-(CH_2)_n-NH-(CH_2)_m-$ (wherein, n, m, and j are each an integer of 1 or more).

(47) The method according to any one of (38) to (44) wherein the aqueous solution of the amino group-containing coupling agent is an aqueous solution of an amino group-containing titanate represented by the following formula II:

$$(H_2N\text{-}R^1\text{-}O)_pTi(OR^2)_q \qquad \text{(Formula II)}$$

(wherein, in the formula II,

$R^1$ is a C1-C12 hydrocarbon divalent group being linear or branched, saturated or unsaturated, substituted or unsubstituted, cyclic or acyclic, and having a heterocycle or no heterocycle,
$R^2$ is a C1-C5 alkyl group being linear or branched, and
p and q are each an integer of 1 to 3, and p + q = 4.) .
(48) The method according to (47) wherein $R^1$ is a group selected from the group consisting of $-(CH_2)_n-$, $-(CH_2)_n-(CH)_m-(CH_2)_{j-1}-$, $-(CH_2)_n-(CC)-(CH_2)_{n-1}-$, $-(CH_2)_n-NH-(CH_2)_m-$, $-(CH_2)_n-NH-(CH_2)_m-NH-(CH_2)_j-$, $-(CH_2)_{n-1}-(CH)NH_2-(CH_2)_{m-1}-$, $-(CH_2)_{n-1}-(CH)NH_2-(CH_2)_{m-1}-NH-(CH_2)_j-$, and $-CO-NH-(CH_2)_n-$, $-CO-NH-(CH_2)_n-NH-(CH_2)_m-$ (wherein n, m and j are each an integer of 1 or more).
(49) The method according to any one of (31) to (48) wherein the metal powder is a metal powder produced by a wet method.
Moreover, the present invention also resides in the following (51).
(51) A method for producing an electrode including:

- a step of applying the metal powder paste produced by the production method according to any one of (31) to (49) to a substrate; and
- a step of heating and firing(sintering) the metal powder paste applied to the substrate.

Advantageous Effects of Invention

The surface-treated metal powder used for the metal powder paste according to the present invention is free from the aggregation subsequent to the surface treatment, excellent in sintering delay property, and high in sintering initiation temperature even in the case of a metal powder composed of small particles. Accordingly, the metal powder paste based on the present invention is excellent in sintering delay property and also excellent in the dispersibility of the metal powder in the paste, and hence allows the production of the electrodes for multilayer ceramic capacitors (chip laminated ceramic capacitors) to be performed advantageously through avoiding problems in production such as delamination of electrodes. In addition, the surface-treated metal powder can be produced by applying an extremely simple treatment to a metal powder as a raw material, and the production of a metal powder paste based on the present invention can be performed by applying an extremely simple treatment to the surface-treated metal powder, and hence does not require sophisticated techniques and is excellent in operability and productivity.

Description of Embodiments

Hereinafter, the present invention is described in detail with reference to embodiments. The present invention is construed not to be limited to the specific embodiments presented below.

[Production of Metal Powder Paste]

In the present invention, a step of preparing a metal powder dispersion liquid by mixing a metal powder with an aqueous solution of an amino group-containing coupling agent, a step of collecting as a residue the metal powder from the metal powder dispersion liquid, and a step of washing the metal powder collected as a residue with an aqueous solvent are performed to allow a surface-treated metal powder to be obtained from this metal powder dispersion liquid; then, a step of preparing a paste by dispersing in a solvent the thus obtained surface-treated metal powder and a carboxyl group- or amino group-containing organic compound is performed to allow a metal powder paste to be produced.

In a preferred embodiment, in the solvent, in addition to the surface-treated metal powder and the carboxyl group- or amino group-containing organic compound, a binder resin can be further dispersed, and other additives can be added if desired in the solvent.

[Carboxyl Group-Containing Organic Compound]

The carboxyl group-containing organic compound is preferably an amino acid or a carboxylic acid. Examples of the carboxylic acid may include a fatty acid. Examples of the amino acid may include alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine and valine. In the present invention, it is particularly preferable to use a fatty acid as the carboxyl group-containing organic compound.

[Fatty Acid]

Examples of the fatty acid used in the present invention may include a C3-C24 saturated or unsaturated fatty

acid. In a preferred embodiment, it is possible to use a C3-C24 fatty acid, more preferably a C4-C22 fatty acid, more preferably a C8-C22 fatty acid, more preferably a C12-C22 fatty acid, more preferably a C16-C20 fatty acid, and particularly preferably a C18 fatty acid. In a preferred embodiment, it is possible to use a fatty acid having for example 0 to 4 double bonds, a fatty acid having for example 0 to 3 double bonds and a fatty acid having for example 0 to 2 double bonds. From the viewpoint of quick filtration with a filter, a fatty acid having one double bond is particularly preferable. In a preferred embodiment, it is possible to use a fatty acid having lipophilicity as the fatty acid, and examples of such a fatty acid may include the fatty acids having the above-described numbers of carbon atoms.

In a preferred embodiment, it is possible to use as such a fatty acid one or more selected from the group consisting of crotonic acid, acrylic acid, methacrylic acid, caprylic acid, pelargonic acid, capric acid, lauric acid, myristic acid, pentadecylic acid, palmitic acid, palmitoleic acid, margaric acid, stearic acid, oleic acid, vaccenic acid, linoleic acid, (9,12,15)-linolenic acid, (6,9,12)-linolenic acid, dihomo-γ-linolenic acid, eleostearic acid, tuberculostearic acid, arachidic acid(eicosanoic acid), 8,11-eicosadienoic acid, 5,8,11-eicosatrienoic acid, arachidonic acid, behenic acid, lignoceric acid, nervonic acid, elaidic acid, erucic acid, docosahexaenoic acid, eicosapentaenoic acid and stearidonic acid. In addition, in a particularly preferred embodiment, it is possible to use as the fatty acid one or more selected from the group consisting of stearic acid, oleic acid, linoleic acid, and acrylic acid, and preferably from the group consisting of stearic acid, oleic acid and linoleic acid. As the fatty acid, a salt of a fatty acid can be used: however, in a preferred embodiment, it is preferable to use as the fatty acid a fatty acid itself without using a salt of the fatty acid.

[Amino Group-Containing Organic Compound]

As the amino group-containing organic compound, it is possible to use a saturated or unsaturated aliphatic amine, preferably a C3-C24 aliphatic amine having 0 to 2 double bonds.

[Aliphatic Amine]

As the aliphatic amine, it is possible to use one or more selected from the group consisting of caprylamine, laurylamine, myristylamine, pentadecylamine, palmitylamine, palmitoleylamine, margarylamine, stearylamine, oleylamine, vaccenylamine, linoleylamine, (9,12,15)-linoleylamine, (6,9,12)-linoleylamine, dihomo-γ-linoleylamine, eleostearylamine, tuberculostearylamine, arachidylamine (eicosylamine), 8,11-eicosadienylamine, 5,8,11-eicosatrienylamine, arachidonylamine, behenylamine, lignocerylamine, nervonylamine, elaidylamine, erucylamine, docosahexaenylamine, eicosapentaenylamine and stearidonylamine. As the aliphatic amine, a salt of an aliphatic amine can be used; however, in a preferred embodiment, it is preferable to use as the aliphatic amine an aliphatic amine itself without using a salt of the aliphatic amine.

[Solvent]

As the solvent, a solvent used for a paste for screen printing of electronic materials can be used, and examples of such a solvent may include an alcohol solvent, a glycol ether solvent, an acetate solvent, a ketone solvent and a hydrocarbon solvent. Example of the alcohol solvent may include terpineol, isopropyl alcohol and butyl carbitol. Examples of the terpineol may include α-terpineol, β-terpineol and γ-terpineol, and α-terpineol is particularly preferable. Examples of the glycol ether solvent may include butyl carbitol. Examples of the acetate solvent may include butyl carbitol acetate. Examples of the ketone solvent may include methyl ethyl ketone. Examples of the hydrocarbon solvent may include toluene and cyclohexane. In a preferred embodiment, it is possible to use as the solvent one or more selected from the group consisting of terpineol, isopropyl alcohol, butyl carbitol, butyl carbitol acetate, methyl ethyl ketone, toluene and cyclohexane; it is possible to use one or more preferably selected from the group consisting of α-terpineol, butyl carbitol and butyl carbitol acetate.

[Mass Ratio of carboxyl group- or Amino Group-Containing Organic Compound]

In a preferred embodiment, the metal powder paste according to the present invention allows the mass ratio (carboxyl group- or amino group-containing organic compound/surface-treated metal powder) of the carboxyl group- or amino group-containing organic compound to the surface-treated metal powder to fall within a range from 1/2000 to 1/50, preferably within a range from 1/1000 to 1/20. In addition, in a preferred embodiment, the metal powder paste according to the present invention allows the mass ratio (a carboxyl group- or an amino group-containing organic compound/solvent) of the carboxyl group- or amino group-containing organic compound to the solvent to fall within a range from 1/2000 to 1/50, preferably within a range from 1/1000 to 1/20. In a preferred embodiment, the metal powder paste according to the present invention allows the mass ratio (solvent/surface-treated metal powder) of the solvent to the surface-treated metal powder to fall within a range from 1/4 to 1/1, preferably within a range from 1/3 to 1/1.5.

[Binder Resin]

As the binder resin to be used, any binder resin that improves the adhesion to the substrate can be used; examples of such a binder resin may include a cellulose-based resin, an epoxy-based resin and an acrylic resin. In a preferred embodiment, for example, polyvinylacetal resin, polyvinyl butylal resin, and acrylic acid ester resin can be used.

[Method for Dispersion]

The operation of dispersing in a solvent the surface-treated metal powder, the carboxyl group- or amino group-containing organic compound and the like to prepare a paste can be performed by a heretofore known method; if desired, stirring, kneading, or ultrasonic treatment may be performed. In a preferred embodiment, the carboxyl group- or amino group-containing organic compound can be added to the solvent, at the same time with the addition of the surface-treated metal powder, or in advance of the addition of the surface-treated metal powder.

In a preferred embodiment of the present invention, it is also possible to perform a step of preparing a paste by allowing the carboxyl group- or amino group-containing organic compound to be directly adsorbed to the surface-treated metal powder and to be subsequently dispersed in the solvent; however, in order to allow the handleability in the aggregation and drying steps to be satisfactory, in the step of preparing a paste by dispersing the surface-treated metal powder in the solvent, it is preferable to add the carboxyl group- or amino group-containing organic compound at the same time with the addition of the surface-treated metal powder to be adsorbed to the metal powder.

[Filtration of Paste with Filter]

In a preferred embodiment of the present invention, after the step of preparing the paste, a step of filtering the prepared paste with a filter is performed. Such a filtration with a filter is performed in order to form with the paste fine wirings and ultra-thin electrically conductive layers (electrodes). In a preferred embodiment, as the filter, for example, a filter having a pore size of 1 to 8 $\mu$m, preferably 1 to 5 $\mu$m can be used. In a preferred embodiment, the filtration with a filter is performed as a filtration under a reduced pressure or a filtration under a pressurized pressure. The pressure in the filtration under a reduced pressure can be, for example, a pressure falling within a range from 0.1 to 1.0 atm, preferably within a range from 0.2 to 0.6 atm. The pressure in the filtration under a pressurized pressure can be, for example, a pressure falling within a range from 0.1 to 2.0 atm, preferably within a range from 0.2 to 1.0 atm.

In a preferred embodiment, a filtration under a reduced pressure of 0.3 atm performed with a filter having a pore size of 5 $\mu$m and an effective area of 9.0 $cm^2$ can result in the percentage (permeability) of the proportion of the mass of the metal powder paste permeating the filter in relation to 4 g of the mass of the placed metal powder paste, amounting to, for example, 35% or more, 40% or more, 45% or more or 50% or more in 30 seconds, and for example, 55% or more or 60% or more in 8 minutes.

[Dispersion State of Metal Powder in Paste]

In order to form fine wirings and ultra-thin electrically conductive layers (electrodes), it is preferable to remove, in the included metal powder, the fraction of the metal powder having too large particle sizes or the fraction of the metal powder composed of particles being aggregated together. According to the present invention, the metal powder is excellent in that the metal powder paste before filtration is in a state of being easy to filtrate, namely, a state in which the particle size of the included metal powder is sufficiently small and the aggregation of the particles of the metal powder is sufficiently reduced, accordingly the filtration operation is easy, and thus a sufficiently high collection rate can be achieved. In addition, the metal powder paste according to the present invention is excellent in the dispersion state of the metal powder to such an extent that if desired, the metal powder paste can be used without performing filtration.

[Surface-Treated Metal Powder]

In a preferred embodiment, the surface-treated metal powder can be a surface-treated metal powder, wherein by the multiplex measurement of XPS for the surface-treated metal powder, the photoelectrons of N are detected at 100 cps (counts per second) or more, and the photoelectrons of one element A selected from the group consisting of Al, Si, Ti, Zr, Ce and Sn are detected at 100 cps or more; and the concentration x(atomic%) of the one element A selected from the group consisting of Al, Si, Ti, Zr, Ce and Sn, quantitatively determined by the multiplex measurement of XPS for the surface-treated metal powder and the sintering initiation temperature y(°C) of the surface-treated metal powder satisfy the following formula:

$$130x + 580 \leq y$$

(wherein, the concentration x(atomic%) is the value of the concentration representing, on the basis of percentage(%), the quantitatively determined value of the one element A selected from the group consisting of Al, Si, Ti, Zr, Ce and Sn in relation to the values quantitatively determined by the multiplex measurement of XPS of the five elements, namely, the one element A selected from the group consisting of Al, Si, Ti, Zr, Ce and Sn, the element B of the metal of the metal powder, N(nitrogen), C(carbon) and O(oxygen)).

In a preferred embodiment, the surface-treated metal powder can be a surface-treated metal powder wherein the surface of the metal powder is a surface-treated metal powder provided with a surface-treatment layer (a layer formed by surface treatment) including one element selected from the group consisting of Al, Si, Ti, Zr, Ce and Sn; and in the concentration profile of the EDS in the vicinity of the surface obtained by STEM, when the thickness of the surface-treatment layer (the layer formed by surface treatment) including one element selected from the group consisting of Al, Si, Ti, Zr, Ce and Sn is represented by x(nm) and the sintering initiation temperature of the metal powder is represented by y(°C), the following formulas are satisfied:

$$0.5 \leq x \leq 10$$

$$25x + 620 \leq y$$

In a preferred embodiment, the surface-treated metal powder can be a surface-treated metal powder wherein the weight percentage of N(nitrogen) in relation to the surface-treated metal powder is 0.02% or more; and when the deposition amount of the one element selected from the group consisting of Al, Si, Ti, Zr, Ce and Sn in relation to 1 g of the metal powder is represented by x(μg), and the sintering initiation temperature is represented by y(°C), the following formulas are satisfied:

$$50 \leq x \leq 1500$$

$$y \geq 0.2x + 600$$

[Metal Powder Used for Surface Treatment]

As the metal for the metal powder used for the surface treatment, for example, a metal selected from Ag, Pd, Pt, Ni and Cu can be used; a metal selected preferably from Ag, Ni and Cu can be used. As the metal powder, copper powder, silver powder and nickel powder are preferable.

[Method for Producing Metal Powder]

As the metal powder used for the surface treatment as described above, a metal powder produced by a heretofore known method can be used. In a preferred embodiment, for example, a metal powder produced by a wet method and a metal powder produced by a dry method can be used. In a preferred embodiment, a copper powder produced by a wet method such as a copper powder produced by a disproportionation method or a chemical reduction method can be used. The copper powder produced by a wet method is preferable because wet processes are consistently involved from the production of the copper powder to the surface treatment according to the present invention.

[Element Adsorbed by Surface Treatment]

In the surface-treated metal powder, one element selected from the group consisting of Al, Si, Ti, Zr, Ce and Sn is adsorbed on the surface of the metal powder by surface treatment to form the surface-treatment layer (the layer formed by surface treatment). In a preferred embodiment, the element is one element selected from the group consisting of Al, Si and Ti, and more preferably Si or Ti.

[Thickness of Surface-Treatment Layer (The Layer Formed By Surface Treatment)]

In a preferred embodiment, in the present invention, the thickness x (nm) of the surface-treatment layer (the layer formed by surface treatment) can be determined from the concentration profile of the EDS in the vicinity of the surface obtained by STEM. The thickness of the surface-treatment layer (the layer formed by surface treatment) such as the thickness of the Si-containing layer (Si thickness) is specified in a cross section of the surface of the surface-treated copper powder as the range where the content of the Si atom is 10% or more when a measurement based on EDS (energy dispersion type X-ray analysis) is performed, and the content of the Si atom at the depth where the ratio of the content of the Si atoms to the contents of all the atoms is maximum is taken as 100%. For the cross section of the surface of the surface-treated metal powder, five metal powder particles are selected from at least 100 or more of metal powder particles observed in a sample specimen, the most clear boundaries of the respective particles are treated as the cross sections perpendicular to the surface of the surface-treated metal powder, and thus the measurement and the adding up can be performed. The thickness of the surface-treatment layer (the layer formed by surface treatment) can be determined even in the cases of the thickness of the Ti-containing layer (Ti thickness), the thickness of the Al-containing layer (Al thickness) and the like, in the same manner as in the case of the thickness of the Si-containing layer (Si thickness).

[Deposition Amount of Element]

In the surface-treated metal powder, one element selected from the group consisting of Al, Si, Ti, Zr, Ce and Sn is adsorbed on the surface of the metal powder by surface treatment to form the surface-treatment layer (the layer formed by surface treatment). The deposition amount of the element can be determined by ICP (inductively coupled plasma atomic emission analysis method) as described in Examples. The deposition amount of the element, in relation to 1 g of the metal powder, is 100 to 1000 $\mu$g, and preferably 100 to 600 $\mu$g. The deposition amount of an element in relation to the metal powder can also be represented in terms of ppm; 1 ppm means that the deposition amount of the element is 1 $\mu$g in relation to 1 g of the metal powder.

The surface-treated metal powder includes in the surface thereof the nitrogen derived from the amino group at the terminal of the coupling agent. The weight percentage of N (nitrogen) (wt%) in relation to the surface-treated metal powder is 0.02 wt% or more and preferably 0.03 wt% or more, and can be, for example, within a range from 0.02 to 0.50 wt%, preferably within a range from 0.02 to 0.20 wt% and more preferably within a range from 0.02 to 0.15 wt%. The weight percentage of N(nitrogen) in relation to the surface-treated metal powder can be calculated as the deposition amount of N from the amount of $NO_2$ generated by melting the metal powder at a high temperature.

[XPS Multiplex Measurement]

The element deposited on the surface of the surface-treated metal powder, namely, the element selected from the group consisting of Ti, Si, Al, Sn, Zr and Ce, N(nitrogen), C(carbon), O(oxygen), and additionally the element selected from the group consisting of Ag, Ni and Cu are taken as the objects, and the objects can be analyzed by the multiplex measurement of XPS for the surface-treated metal powder under the following conditions:

Surface N, and surface Si and Ti: In a cylindrical vessel of 0.5 mm in diameter, 0.5 g of the metal powder was filled, and spread all over the bottom surface. The upper surface of the copper powder spread all over the bottom of the cylindrical vessel was subjected to the multiplex measurement of XPS. (Semi-quantitative analysis of N, and Si and Ti deposited on the upper half of the surface of the metal powder spheres)
Apparatus: 5600MC manufactured by ULVAC-PHI, INCORPORATED
Ultimate vacuum: $5.7 \times 10^{-9}$ Torr
Excitation source: Monochromated AlK$\alpha$
Output: 210 W
Detection area: 800 $\mu$m$\phi$
Incident angle, takeoff angle: 45°
Object elements: Three elements C, N, O

Element selected from the group consisting of Ag, Ni and Cu
Element selected from the group consisting of Ti, Si, Al, Sn, Zr and Ce

[Concentrations of Elements on Surface by Multiplex Measurement of XPS]

By the multiplex measurement of XPS for the surface-treated metal powder, numbers of photoelectrons (cps)

and the concentrations on the surface of various elements can be measured. In a preferred embodiment, in the surface-treated metal powder, on the basis of the multiplex measurement of the XPS (X-ray photoelectron spectroscopy) analysis method, the concentration of N on the surface can be, for example, 1.0% or more, 1.1% or more and 1.2% or more, and alternatively, for example, 6.0% or less, 4.0% or less and 3.7% or less; moreover, preferably, in the above-described concentrations, the number of photoelectrons of N can be, for example, 100 cps (counts per second) or more, preferably 110 cps or more, or alternatively, for example, within a range from 100 to 9000 cps, or within a range from 100 to 8000 cps.

In a preferred embodiment, in the surface-treated metal powder, on the basis of the multiplex measurement of the XPS (X-ray photoelectron spectroscopy) analysis method, the concentration of one element A selected from the group consisting of Al, Si, Ti, Zr, Ce and Sn on the surface can be, for example, 0.5% or more, 0.6% or more and 0.7% or more, or alternatively, for example, 4.0% or less, 2.0% or less, 1.9% or less and 1.8% or less; the number of photoelectrons of the element, for example, on the basis of the irradiation of a circle of 800 μm in diameter (the irradiation area: 502655 $\mu m^2$) can be 100 cps (counts per second) or more, 110 cps or more and 120 cps or more, or alternatively, for example within a range from 100 to 9000 cps and within a range from 100 to 8000 cps.

[Sintering Initiation Temperature]

The surface-treated metal powder, in the same manner as in the case of the metal powder, enables the production of an electrically conductive metal powder paste using the surface-treated metal powder, and also enables the production of electrodes by sintering the resulting electrically conductive metal powder paste. The surface-treated metal powder according to the present invention has excellent sintering delay property. As an index of the sintering delay property, the sintering initiation temperature is available. The sintering initiation temperature is the temperature at which a certain volume change (contraction) occurs when temperature of a green compact formed of a metal powder is increased in a reducing atmosphere. In the present invention, the temperature at which a volume contraction of 1% occurs is defined as the sintering initiation temperature. Specifically, the sintering initiation temperature was measured as described in Examples. The fact that the sintering initiation temperature is high means being excellent in sintering delay property.

In a preferred embodiment, the sintering initiation temperature of the surface-treated metal powder according to the present invention can be 450°C or higher, preferably 500°C or higher, more preferably 600°C or higher, more preferably 700°C or higher, more preferably 780°C or higher, more preferably 800°C or higher, more preferably 810°C or higher, more preferably 840°C or higher, more preferably 900°C or higher, more preferably 920°C or higher and more preferably 950°C or higher. In particular, as compared with the fact that the sintering initiation temperature of the Ni ultrafine powder (average particle size: 0.2 to 0.4μm) having hitherto been used in the case where a high sintering initiation temperature is demanded is within a range from 500 to 600°C, the surface-treated copper powder according to the present invention has an equivalent or higher sintering delay property by using inexpensive and easily available Cu as compared with Ni and in spite of being fine particles. In addition, even in the case of a nickel powder, a nickel powder subjected to the surface treatment according to the present invention has more excellent sintering delay property than conventional nickel powders.

[Concentration of Element on Surface and Sintering Initiation Temperature]

In a preferred embodiment, under the conditions that by the multiplex measurement of XPS for the surface-treated metal powder, the photoelectrons of N are detected at 100 cps (counts per second) or more, and the photoelectrons of one element A selected from the group consisting of Al, Si, Ti, Zr, Ce and Sn are detected at 100 cps or more, the surface-treated metal powder is a surface-treated metal powder wherein the concentration x(atomic%) of the one element A selected from the group consisting of Al, Si, Ti, Zr, Ce and Sn, quantitatively determined by the multiplex measurement of XPS for the surface-treated metal powder and the sintering initiation temperature y(°C) of the surface-treated metal powder satisfy the following formula:

$$130x + 580 \leq y$$

(wherein, the concentration x(atomic%) is the value of the concentration representing, on the basis of percentage(%), the quantitatively determined value of the one element A selected from the group consisting of Al, Si, Ti, Zr, Ce and Sn in relation to the values quantitatively determined by the multiplex measurement of XPS of the five elements, namely, the one element A selected from the group consisting of Al, Si, Ti, Zr, Ce and Sn, the element B of the metal of the metal powder, N(nitrogen), C(carbon) and O(oxygen)). In the above-described formula, the constant 130 has a unit of [°C/atomic%]. In a preferred embodiment, the x satisfies the following formula:

$$0.5 \leq x \leq 2.0$$

and preferably the following formula:

$$1.0 \leq x \leq 2.0$$

[Thickness of Surface-Treatment Layer and Sintering Initiation Temperature]

In a preferred embodiment, the surface-treated metal powder according to the present invention is a metal powder wherein when the thickness of the surface-treatment layer (the layer formed by surface treatment) including one element selected from the group consisting of Al, Si, Ti, Zr, Ce and Sn is represented by x(nm) and the sintering initiation temperature of the metal powder is represented by y(°C), the following formulas are satisfied:

$$0.5 \leq x \leq 10$$

$$25x + 620 \leq y$$

In one of the above-described formulas, the constant 25 has a unit of [°C/nm]. In a preferred embodiment, the x satisfies the following formula:

$$0.5 \leq x \leq 8$$

[Deposition Amount of Element and Sintering Initiation Temperature]

The surface-treated metal powder is a surface-treated metal powder wherein the weight percentage of N(nitrogen) in relation to the surface-treated metal powder is 0.02% or more, and when the deposition amount of one element selected from the group consisting of Al, Si, Ti, Zr, Ce and Sn is represented by x (μg), and the sintering initiation temperature of the metal powder is represented by y(°C), the following formulas are satisfied:

$$50 \leq x \leq 1500$$

$$y \geq 0.2x + 600$$

preferably the following formula is satisfied:

$$100 \leq x \leq 1000$$

and more preferably the following formula is satisfied:

$$100 \leq x \leq 600$$

[Average Particle Size]

In the surface-treated metal powder, the average particle size D50 measured with a laser diffraction particle size distribution analyzer can be within a range from 0.05 to 1 μm, preferably within a range from 0.05 to 0.5 μm, the maximum particle size Dmax can be 1 μm, and secondary particles can be made absent. As the laser diffraction particle size distribution analyzer, for example, SALD-2100 manufactured by Shimadzu Corp. can be used. In the present invention, the secondary particles mean the particles in the vicinity of the larger maximum value(s) in the case where

when the particle size distribution is measured by the above-described method, there are two or more maximum values. When only one maximum value of the particle size distribution is found, it is said that no secondary particles are present.

[Metal Powder Paste]

By using the surface-treated metal powder, a metal powder paste (electrically conductive paste) can be produced. The surface-treated metal powder does not aggregate in the paste even when the paste is produced, and is easily dispersed. Thus, because the obtained electrically conductive paste is reduced in the aggregation of particles, the obtained electrically conductive paste can easily form flat coating films demanded for thin layer electrodes, and is suitable for forming flat thin layer electrodes. In this way, the surface-treated metal powder and the electrically conductive paste using this metal powder are excellent in operability and productivity, moreover excellent in sintering delay property, and exhibit a high sintering initiation temperature.

[Flatness of Coating Film]

The flatness of the coating film formed of the metal powder paste can be evaluated, as described in Examples, by measuring the maximum mountain height Rz of the coating film with a contact-type surface roughness meter (SE-3400, manufactured by Kosaka Laboratory Ltd.) according to JIS-B0601 with n=3, and by deriving the average value. The metal powder paste reflects the low aggregation property and the high dispersibility of the surface-treated metal powder, and consequently is a paste to allow the coating film formed thereof to have a small Rz and display a high flatness.

[Electrodes]

In a preferred embodiment, a metal powder paste is produced, the paste is applied and then sintered, and thus electrodes can be produced. The sintered bodies (electrodes) produced by sintering are suitable as flat thin layer electrodes, and accordingly can be particularly suitably used as the internal electrodes of multilayer ceramic capacitors (chip laminated ceramic capacitors). The multilayer ceramic capacitor (chip laminated ceramic capacitor) is capable of being used in miniature and high density mounting, thus can be used as suitably mounted in internal layers or the outermost layer of a multilayer substrate, and can be suitably used as mounted in electronic components.

[Cross Section of Electrode]

According to a preferred embodiment of the present invention, an electrode (sintered body) produced by sintering can be a sintered body in the cross section of which preferably particles of 10 nm or more in diameter, of any of $SiO_2$, $TiO_2$ and $Al_2O_3$ are present. In a preferred embodiment, this sintered body can be a sintered body in the cross section of which particles of any of $SiO_2$, $TiO_2$ and $Al_2O_3$, each having a maximum diameter of 0.5 $\mu$m or more are present in a number density of 0.5 particle/$\mu m^2$, or alternatively, for example, within a number density range from 0.0 to 0.5 particle/$\mu m^2$, or for example, within a number density range from 0.1 to 0.5 particle/$\mu m^2$. The maximum diameter as referred to herein means the diameter of the minimum circumscribed circle of a particle of $SiO_2$, $TiO_2$ or $Al_2O_3$. In a preferred embodiment of the present invention, the precipitation of the particles of $SiO_2$, $TiO_2$ or $Al_2O_3$ is controlled in this way, and thus the formation of an ultra-thin electrode is made possible, and at the same time, the reliability (quality) of the electrode is free from being degraded.

[Production of Surface-Treated Metal Powder]

The surface-treated metal powder can be obtained by performing: a step of preparing a metal powder dispersion liquid by mixing a metal powder with an aqueous solution of an amino group-containing coupling agent; a step of collecting as a residue the metal powder from the metal powder dispersion liquid; and a step of washing the metal powder collected as the residue with an aqueous solvent.

In a preferred embodiment, it is possible to perform a step of obtaining a surface-treated metal powder by drying the washed metal powder, after the step of washing the metal powder collected as the residue with an aqueous solvent.

Basically, if a surface treatment is performed with the use of a coupling agent in a metal powder, a sufficient adsorption of the coupling agent should be desirable. The present inventor also believed as described above, and have developed the surface treatment of a metal powder. However, when a metal powder was washed with an aqueous solvent, and performed an operation probably completely removing the coupling agent, the surface-treated metal powder obtained in this way exhibited rather an excellent sintering delay property, a low aggregation property, and a high dispersibility, and moreover the coating film obtained by applying the surface-treated metal powder as a paste was found to be flattened, and thus the present inventor reached the present invention relating to the surface-treated metal powder.

[Metal Powder Used for Surface Treatment]

As the metal powder used for the surface treatment, such a metal powder as described above can be used. Moreover, as a suitably usable metal powder, a copper powder produced by the following wet method can be quoted.

[Production of Copper Powder by Wet Method]

In a preferred embodiment, it is possible to produce a copper powder produced by using, as the method for producing a copper powder by a wet method, a method including a step of preparing a slurry by adding cuprous oxide to an aqueous solvent containing an additive of gum arabic, and a step of performing a disproportionation reaction by adding diluted sulfuric acid to the slurry at a time within 5 seconds. In a preferred embodiment, the slurry is maintained at room temperature (20 to 25°C) or lower, and can be subjected to a disproportionation reaction by adding diluted sulfuric acid maintained similarly at room temperature or lower. In a preferred embodiment, the slurry is maintained at 7°C or lower, and can be subjected to a disproportionation reaction by adding diluted sulfuric acid maintained similarly at 7°C or lower. In a preferred embodiment, the addition of diluted sulfuric acid can be performed in such a way that the pH is 2.5 or lower, preferably 2.0 or lower and more preferably 1.5 or lower. In a preferred embodiment, the addition of diluted sulfuric acid to the slurry can be performed within 5 minutes, preferably within 1 minute, more preferably within 30 seconds, more preferably within 10 seconds and more preferably within 5 seconds. In a preferred embodiment, the disproportionation reaction can be arranged to be completed in 10 minutes. In a preferred embodiment, the concentration of gum arabic in the slurry can be 0.229 to 1.143 g/L. As the cuprous oxide, it is possible to use the cuprous oxide used in heretofore known methods, preferably cuprous oxide particles; the particle size and the like of cuprous oxide is not directly related to the particle size and the like of the copper powder produced by the disproportionation reaction, and accordingly coarse grained cuprous oxide particles can be used. The principle of the disproportionation reaction is as follows:

$$CU_2O + H_2SO_4 \rightarrow Cu\downarrow + CuSO_4 + H_2O$$

The copper powder obtained by the disproportionation is, if desired, subjected to washing, rust prevention, filtration, drying, disintegration and classification, and then can be mixed with an aqueous solution of an amino group-containing coupling agent; however, in a preferred embodiment, the copper powder obtained by the disproportionation is, if desired, subjected to washing, rust prevention and filtration, and then can be mixed with, as it is, without being dried, with an aqueous solution of an amino group-containing coupling agent.

In a preferred embodiment, in the copper powder obtained by the disproportion reaction, the average particle size as measured with a laser diffraction particle size distribution analyzer is 0.25 μm or less. In a preferred embodiment, in the copper powder obtained by the disproportion reaction, D10, D90 and Dmax as measured with a laser diffraction particle size distribution analyzer satisfy the relations [$Dmax \leq D50 \times 3$, $D90 \leq D50 \times 2$, and $D10 \geq D50 \times 0.5$] and the particle size distribution has a single peak. In a preferred embodiment, in the copper powder obtained by the disproportion reaction, the particle size distribution has only a single mountain (has a single peak) on the basis of the measurement with a laser diffraction particle size distribution analyzer. In a preferred embodiment, the values measured with a laser diffraction particle size distribution analyzer satisfy [$D50 \leq 1.5$ μm], preferably [$D50 \leq 1.0$ μm], more preferably [$D50 \leq 0.5$ μm and $Dmax \leq 1.0$ μm]. As a laser diffraction particle size distribution analyzer, for example, the SALD-2100 manufactured by Shimadzu Corp. can be used.

[Amino Group-Containing Coupling Agent]

In the present invention, the surface-treated metal powder is provided with a surface-treatment layer (the layer formed by surface treatment) including one element selected from the group consisting of Al, Si, Ti, Zr, Ce and Sn, and these element are derived from the amino group-containing coupling agent. In a preferred embodiment, as the amino group-containing coupling agent, it is possible to use one or more coupling agents selected from the group consisting of an aminosilane, an amino-containing titanate and an amino-containing aluminate. In a preferred embodiment, an amino group-containing coupling agent has a structure having an amino group at the terminal of the molecular chain, coordinating with the central atom such as an Al, Ti or Si atom. The present inventor considers that the location of the amino group at the terminal provides a preferable surface treatment.

[Aminosilane]

In a preferred embodiment, as an amino group-containing coupling agent, it is possible to use an aminosilane represented by the following formula I:

$H_2N-R^1Si(OR^2)_2(R^3)$ (Formula I)

(wherein, in the formula I,
$R^1$ is a C1-C12 hydrocarbon divalent group being linear or branched, saturated or unsaturated, substituted or unsubstituted, cyclic or acyclic, and having a heterocycle or no heterocycle,
$R^2$ is a C1-C5 alkyl group, and
$R^3$ is a C1-C5 alkyl group, or a C1-C5 alkoxy group.)

In a preferred embodiment, $R^1$ in the formula I is a C1-C12 hydrocarbon divalent group being linear or branched, saturated or unsaturated, substituted or unsubstituted, cyclic or acyclic, and having a heterocycle or no heterocycle, more preferably $R^1$ can be a group selected from the group consisting of a substituted or unsubstituted, C1-C12 linear saturated hydrocarbon divalent group, a substituted or unsubstituted, C1-C12 branched saturated hydrocarbon divalent group, a substituted or unsubstituted, C1-C12 linear unsaturated hydrocarbon divalent group, a substituted or unsubstituted, C1-C12 branched unsaturated hydrocarbon divalent group, a substituted or unsubstituted, C1-C12 cyclic hydrocarbon divalent group, a substituted or unsubstituted, C1-C12 heterocyclic hydrocarbon divalent group, and a substituted or unsubstituted, C1-C12 aromatic hydrocarbon divalent group. In a preferred embodiment, $R^1$ in the formula I is a C1-C12, saturated or unsaturated chain hydrocarbon divalent group, more preferably, a divalent group in which the atoms at both terminals of the chain structure each have a free valence. In a preferred embodiment, the number of carbon atoms of the divalent group can be, for example, 1 to 12, preferably 1 to 8, preferably 1 to 6, and preferably 1 to 3.

In a preferred embodiment, $R^1$ in the formula I can be a group selected from the group consisting of $-(CH_2)_n-$, $-(CH_2)_n-(CH)_m-(CH_2)_{j-1}-$, $-(CH_2)_n-(CC)-(CH_2)_{n-1}-$, $(CH_2)_n-NH-(CH_2)_m-$, $-(CH_2)_n-NH-(CH_2)_m-NH-(CH_2)_j-$, $-(CH_2)_{n-1}-(CH)NH_2-(CH_2)_{m-1}-$, $-(CH_2)_{n-1}-(CH)NH_2-(CH_2)_{m-1}-NH-(CH_2)_j-$, $-CO-NH-(CH_2)_n-$, and $-CO-NH-(CH_2)_n-NH-(CH_2)_m-$ (wherein, n, m and j are each an integer of 1 or more). (The (CC) represents a triple bond between C and C.) In a preferred embodiment, $R^1$ can be $-(CH_2)_n-$, or $-(CH_2)_n-NH-(CH_2)_m-$. (The (CC) represents a triple bond between C and C.) In a preferred embodiment, the hydrogen atom(s) of the divalent group $R^1$ may be substituted with an amino group; for example one to three hydrogen atoms may each be substituted with an amino group, for example one or two hydrogen atoms may each be substituted with an amino group, or for example one hydrogen atom may be substituted with an amino group.

In a preferred embodiment, n, m and j in the formula I can each be independently an integer of 1 or more and 12 or less, preferably an integer of 1 or more and 6 or less, and more preferably 1 or more and 4 or less; for example, n, m and j in the formula I can each be independently an integer selected from 1, 2, 3 and 4; for example, n, m and j in the formula I can each be independently 1, 2 or 3.

In a preferred embodiment, $R^2$ in the formula I can be an C1-C5 alkyl group, preferably a C1-C3 alkyl group, and more preferably a C1 or C2 alkyl group, for example can be a methyl group, an ethyl group, an isopropyl group or a propyl group, and can be preferably a methyl group or an ethyl group.

In a preferred embodiment, $R^3$ in the formula I can be as an alkyl group, a C1-C5 alkyl group, preferably a C1-C3 alkyl group, and more preferably a C1 or C2 alkyl group, for example can be a methyl group, an ethyl group, an isopropyl group, or a propyl group, and can be preferably a methyl group or an ethyl group. In addition, $R^3$ in the formula I can be as an alkoxy group, a C1-C5 alkoxy group, preferably a C1-C3 alkoxy group, and more preferably a C1 or C2 alkoxy group, for example can be a methoxy group, an ethoxy group, an isopropoxy group or a propoxy group, and can be preferably a methoxy group or an ethoxy group.

[Amino-Containing Titanate]

In a preferred embodiment, as an amino group-containing coupling agent, it is possible to use an amino group-containing titanate represented by the following formula II:

$(H_2N-R^1-O)_pTi(OR^2)_q$ (Formula II)

(wherein, in the Formula II,
$R^1$ is a C1-C12 hydrocarbon divalent group being linear or branched, saturated or unsaturated, substituted or unsubstituted, cyclic or acyclic, and having a heterocycle or no heterocycle,
$R^2$ is a C1-C5 alkyl group being linear or branched, and
p and q are each an integer of 1 to 3, and p + q = 4.)

In a preferred embodiment, as $R^1$ in the formula II, the groups quoted as $R^1$ of the formula I can be suitably used. $R^1$ in the formula II can be, for example, a group selected from the group consisting of $-(CH_2)_n-$, $-(CH_2)_n-(CH)_m-(CH_2)_{j-1}-$, $-(CH_2)_n-(CC)-(CH_2)_{n-1}-$, $-(CH_2)_n-NH-(CH_2)_m-$,$-(CH_2)_n-NH-(CH_2)_m-NH-(CH_2)_j-$, $-(CH_2)_{n-1}-(CH)NH_2-(CH_2)_{m-1}-$,$-(CH_2)_{n-1}-(CH)NH_2-(CH_2)_{m-1}-NH-(CH_2)_j-$, $-CO-NH-(CH_2)_n-$, and-CO-

$NH-(CH_2)_n-NH-(CH_2)_m-$ (wherein, n, m and j are each an integer of 1 or more). Particularly preferable examples of $R^1$ may include - $(CH_2)_n-NH-(CH_2)_m-$ (wherein, n + m = 4, particularly preferably n = m = 2).

As $R^2$ of the formula II, the groups quoted as $R^2$ of the formula I can be suitably used. In a preferred embodiment, examples of $R^2$ of the formula II may include a C3 alkyl group, particularly preferably a propyl group and an isopropyl group.

In the formula II, p and q are each an integer of 1 to 3, and p + q = 4, preferably a combination represented by p = q = 2 and a combination of p = 3 and q = 1 may be quoted. Examples of an amino group-containing titanate having functional groups arranged as described above may include Plenact KR44 (manufactured by Ajinomoto Fine-Techno Co., Ltd.).

[Preparation of Metal Powder Dispersion Liquid]

A metal powder is mixed with an aqueous solution of an amino group-containing coupling agent to prepare a metal powder dispersion liquid. In a preferred embodiment, a metal powder dispersion liquid can contain, in relation to 1 g of the metal powder, an amino group-containing coupling agent in an amount of 0.005 g or more, 0.025 g or more, preferably 0.050 g or more, more preferably 0.075 g or more, more preferably 0.10 g or more, or alternatively, for example, in an amount within a range from 0.005 to 0.500 g, within a range from 0.025 to 0.250 g, or within a range from 0.025 to 0.100g. The metal powder and the aqueous solution of the amino group-containing coupling agent can be mixed with each other by heretofore known methods. In this mixing, stirring can be appropriately performed by heretofore known methods. In a preferred embodiment, the mixing can be performed, for example, at room temperature, and for example at a temperature within a range from 5 to 80°C, within a range from 10 to 40°C, or within a range from 20 to 30°C.

[Stirring and Ultrasonic Treatment of Metal Powder Dispersion Liquid]

In a preferred embodiment, after the step of preparing a metal powder dispersion liquid, it is possible to perform a step of stirring the metal powder dispersion liquid. In addition, in a preferred embodiment, after the step of preparing a metal powder dispersion liquid, it is possible to perform a step of performing an ultrasonic treatment of the metal powder dispersion liquid. Only either of the stirring and the ultrasonic treatment can be performed; however, both of the stirring and the ultrasonic treatment can be performed simultaneously, or alternatively, the stirring and the ultrasonic treatment can also be performed sequentially. The ultrasonic treatment can be performed at an output power, per 100 ml, of preferably 50 to 600 W, and more preferably 100 to 600 W. In a preferred embodiment, the ultrasonic treatment can be performed at a frequency of preferably 10 to 1 MHz, more preferably 20 to 1 MHz, and more preferably 50 to 1 MHz. The treatment time of the ultrasonic treatment is selected according to the state of the copper powder dispersion liquid; however, the treatment time of the ultrasonic treatment can be preferably 1 to 180 minutes, more preferably 3 to 150 minutes, more preferably 10 to 120 minutes, and more preferably 20 to 80 minutes.

[Washing with Aqueous Solvent]

After in the metal powder dispersion liquid, the metal powder in the metal powder dispersion liquid is sufficiently brought into contact with the coupling agent by the mixing, the stirring and/or the ultrasonic treatment, a step of collecting the metal powder as the residue from the metal powder dispersion liquid, and a step of washing the metal powder collected as the residue with the aqueous solution are performed. The collection as the residue can be performed with a heretofore known method; for example, filtration, decantation, centrifugation and the like can be used; preferably filtration can be used. The washing with an aqueous solvent can be performed by using an aqueous solvent with a heretofore known method. For example, the washing of the metal powder with an aqueous solvent can be performed by again collecting the metal powder as a residue after the aqueous solvent is added to the residue and stirred; or alternatively, for example, the washing of the metal powder with an aqueous solvent can also be performed by continuously adding the aqueous solvent to the residue placed on the filter for filtration.

In a preferred embodiment, the washing with an aqueous solvent can be performed by washing the metal powder collected as the residue with the aqueous solvent until in the filtrate obtained after adding the aqueous solvent having a mass of five times the dry mass of the metal powder after washing, the concentration as detected by ICP analysis of one element selected from the group consisting of Si, Ti, Al, Zr, Ce and Sn is 50 ppm or less, preferably 30 ppm or less. The lower limit of the concentration is not particularly limited; however, for example, the lower limit of the concentration can be, for example, 1 ppm or more, and, for example, 5 ppm or more.

[Aqueous Solvent]

As the aqueous solvent used for the washing, pure water or an aqueous solution can be used. As the aqueous solution, it is possible to use, for example, the aqueous solutions in which one or more solutes or one or more solvents

selected from an inorganic acid, a salt of an inorganic acid, an organic acid, a salt of an organic acid, a water-soluble alcohol and a water-soluble ester are dissolved or dispersed. Examples of the inorganic acid and the salt thereof may include hydrochloric acid, nitric acid, sulfuric acid, phosphoric acid and carbonic acid, and the salts of these. Examples of the salts may include a sodium salt, a potassium salt and a calcium salt. Examples of the organic acid and the salt thereof may include monobasic to tribasic C1-C7 carboxylic acids and the salts thereof such as formic acid, acetic acid, lactic acid, malic acid, citric acid, oxalic acid, benzoic acid and phthalic acid, and the salts of these. Examples of the salts may include sodium salts, potassium salts and calcium salts. Examples of the alcohol may include monohydric to trihydric C1-C6 alcohols such as methanol, ethanol, isopropyl alcohol, ethylene glycol, glycerin and phenol. Examples of the water-soluble ester may include C1-C12 esters such as the esters between the above-described acids and the above-described alcohols. The pH of the aqueous solvent can be within a range preferably from pH7 to 14, and more preferably within a range from pH8 to 12. As the pure water, highly purified, high-purity water can be used; however, water having industrially usable purity and being free from intentional addition of a compound(s) can also be used. It is possible to use any content of the solute or the solvent dissolved or dispersed in the aqueous solution, falling within a range allowing the solute or the solvent to be dissolved or dispersed, and allowing the concentration of the element detected by the above-described ICP analysis to fall within the above-described range. Within a range satisfying such conditions, it is possible to include the solute or the solvent, in relation to the mass of the aqueous solution, within a range from 0.0001 mass% to 20 mass%, or within a range from 0.001 mass% to 10 mass%.

[Drying]

The washed metal powder is separated from the aqueous solvent, and then if necessary can proceed to the next step without being dried, or alternatively, if necessary, can be dried and obtained as a surface-treated metal powder. For the drying, heretofore known methods can be used. In a preferred embodiment, the drying can be performed in an oxygen atmosphere or in an inert atmosphere. The drying can be performed by heat drying, for example, by heat treatment at a temperature of 50 to 90°C, or 60 to 80°C, for example, for 30 to 120 minutes, or 45 to 90 minutes. Successively to the heat drying, the surface-treated metal powder may be further subjected, if desired, to pulverization treatment.

[Post-Treatment for Surface-Treated Metal Powder]

In a preferred embodiment, the collected surface-treated metal powder may further be subjected to a surface treatment as a post-treatment. For the purpose of improving, for example, the rust prevention or the dispersibility in the paste, an organic substance or the like may further be adsorbed on the surface of the surface-treated metal powder. As such a surface treatment, it is possible to quote, for example, a rust preventive treatment with an organic rust preventive agent such as benzotriazole or imidazole; even by such a common treatment, the surface-treatment layer (the layer formed by surface treatment) according to the present invention does not undergo, for example, detachment. Within a limit not to lose excellent sintering delay property, those skilled in the art can perform, if desired, such a heretofore known surface treatment. The metal powder obtained by further performing a surface treatment on the surface of the surface-treated metal powder, within a limit not to lose excellent sintering delay property, also resides within the scope of the present invention.

[Production of Electrodes]

By applying the metal powder paste to substrates, and by heating and firing (sintering) the electrically conductive metal powder paste applied to the substrates, the electrodes having excellent properties can be produced.

Examples

[Production of Metal Powders]

The metal powders used for surface treatment were produced as follows.

[Copper Powder]

By a wet method based on a disproportionation method, 20 g of a copper powder used for the surface treatment was produced. Specifically, the production was performed according to the following procedures.

(1) To 0.2 g of gum arabic + 350 mL of pure water, 50 g of cuprous oxide was added.
(2) Next, 50 mL of diluted sulfuric acid (25 wt%) was added at a time.

(3) The resulting mixture was stirred with a rotary vane (at 300 rpm, for 10 minutes), and then allowed to stand for 60 minutes.
(4) Next, the precipitate was washed.

The obtained copper powder had the following properties. For the measurement, a laser diffraction particle size distribution analyzer (SALD-2100, manufactured by Shimadzu Corp.) was used.
D50: 0.12 μm, Dmax: 0.28 μm, distribution: having a single mountain

[Silver Powder]

A silver powder was obtained according to Japanese Patent Laid-Open No. 2007-291513. Specifically, 12.6 g of silver nitrate was dissolved in 0.8 L of pure water, and 24 mL of 25% aqueous ammonia and further 40 g of ammonium nitrate were added, to prepare an aqueous solution of silver ammine complex aqueous solution. To the aqueous solution, gelatin was added in a proportion of 1 g/L, the resulting solution was used as an electrolyte, a DSE electrode plate was used for both of an anode and a cathode, electrolysis was performed at a current density of 200 $A/m^2$ and at a solution temperature of 20°C, and the electrolysis was performed for 1 hour while the electrodeposited silver particles were being scraped off from the electrode. The silver powder thus obtained was filtered with a Nutsche, and was washed with pure water and alcohol, in this order. The obtained copper powder had the following properties. For the measurement, a laser diffraction particle size distribution analyzer (SALD-2100, manufactured by Shimadzu Corp.) was used.
D50: 0.10 μm, Dmax: 0.50 μm, distribution: having a single mountain

[Nickel Powder]

A nickel powder was obtained according to Japanese Patent Laid-Open No. 2010-59467. First, gelatin was dissolved in 6 L of pure water, then hydrazine was mixed so as for the concentration thereof to be 0.02 g/L, a mixed solution of palladium and a small amount of silver was added dropwise to prepare a colloidal solution, the pH of the colloidal solution was allowed to be 10 or more by adding sodium hydroxide, and hydrazine was further added to the colloidal solution until the concentration of hydrazine reached 26 g/L.
On the other hand, chromium chloride and magnesium chloride were added to an aqueous solution of nickel chloride having a nickel concentration of 100 g/L in such a way that the concentration of chromium and the concentration of magnesium in relation to nickel each reached 0.03%. To this solution, 0.5 L of the hydrazine solution was dropwise added to perform reduction precipitation of nickel, and thus a nickel powder was obtained. The obtained nickel powder had the following properties. For the measurement, a laser diffraction particle size distribution analyzer (SALD-2100, manufactured by Shimadzu Corp.) was used.
D50: 0.17 μm, Dmax: 0.51 μm, distribution: having a single mountain

[Preparation of Aqueous Solutions of Coupling Agents]

The aqueous solutions of the coupling agents using the following various coupling agents were each prepared in an amount of 50 mL.

Silanes:

Diaminosilane A-1120 (manufactured by Momentive Performance Materials Inc.)
Aminosilane A-1110 (manufactured by Momentive Performance Materials Inc.)
Ureidosilane A-1160 (manufactured by manufactured by Momentive Performance Materials Inc.)
Epoxysilane Z-6040 (manufactured by Dow Corning Toray Co., Ltd.)
3-Phenylaminopropyltrimethoxysilane (manufactured by Momentive Performance Materials Inc.)

Titanates:

Amino group-containing Plenact KR44 (manufactured by Ajinomoto Fine-Techno Co., Ltd.).
Amino group-noncontaining Plenact KR44TTS (manufactured by Ajinomoto Fine-Techno Co., Ltd.).

The solutions were each prepared within a concentration range from 1 to 10 vol%. Except for the amino-based coupling agents (inclusive of ureidosilane), the pH of each of the solutions was regulated to be 4.

The structural formulas of the various silanes are as follows.

Diaminosilane A-1120:

$H_2N\text{-}C_2H_4\text{-}NH\text{-}C_3H_6\text{-}Si(OCH_3)_3$

Aminosilane A-1110:

$H_2N\text{-}C_3H_6\text{-}Si(OCH_3)_3$

Ureidosilane A-1160:

$H_2N\text{-}CO\text{-}NH\text{-}(CH_2)_3\text{-}Si(OCH_2CH_3)_3$

Epoxysilane Z-6040:

[Formula 1]

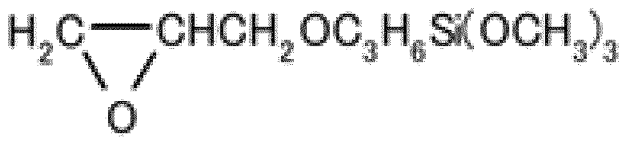

3-Phenylaminopropyltrimethoxysilane:

$C_6H_5\text{-}NH\text{-}C_3H_6\text{-}Si(OCH_3)_3$

[Examples 1 to 14]

[Surface Treatment]

The supernatant liquid was removed from each of the metal powder slurries, and without drying the metal powder, one of the prepared aqueous solutions of the coupling agents and the metal powder were mixed with each other for 60 minutes by any one of the following methods. The mass of each of the metal powders used for the surface treatment was 20 g in relation to 50 mL of each of the aqueous solutions of the coupling agents.

(1) Rotary vane (300 rpm) + ultrasonic wave (ultrasonic cleaner, three-frequency type, W-113, manufactured by Tech Jam Co., Ltd.) (output power: 100 W, frequency: 100 kHz)
(2) Only rotary vane (300 rpm)
(3) Only ultrasonic wave

Next, these aqueous solutions of the coupling agents were suction-filtered, and then pure water was added to the metal powders, and the metal powders were further filtered. Washing by filtration was performed until the concentration of the element, namely, Si, Ti, Al, Zr, Ce or Sn derived from the coupling agent was 50 ppm or less when the filtrate obtained by filtration by adding pure water having a mass of five times the dry mass of the metal powder was subjected after washing to ICP (high frequency inductively-coupled plasma) analysis. In the above-described case, pure water for washing was needed in an amount of about 350 mL. Accordingly, the ICP analysis was performed for about 100 mL of the filtrate obtained by filtering about 100 mL after the final filtration of 350 mL. The obtained residue was dried in a nitrogen atmosphere at 70°C for 1 hour, and then pulverized with a mortar. For this state, the particle size measurement was again performed. In this way, the surface-treated metal powders were obtained. These surface treatments for the metal powders are tabulated in Table 1.

[Evaluation of Surface-Treated Metal Powder]

The surface-treated copper powder obtained by the above-described operations was evaluated by the following

methods.

[Measurement of Size of Metal Powder]

The size of the metal powder was measured by the following method. The results thus obtained are collected in Table 2.
Laser diffraction particle size distribution measurement (SALD-2100, manufactured by Shimadzu Corp.).

[Measurement by TMA]

A sample was prepared from the surface-treated metal powder, and the sintering initiation temperature was measured by using a TMA (Thermomechanical Analyzer) under the following conditions.

Sample preparation conditions

Size of green compact: 7 mmϕ × 5 mm height
Molding pressure: 1 Ton/$cm^2$ (1000 kg-weight/$cm^2$)

(As a lubricant, 0.5 wt% of zinc stearate was added.)

Measurement conditions

Apparatus: TMA-50 manufactured by Shimadzu Corp.
Temperature increase rate: 5°C/min
Atmosphere: 2 vol% $H_2$ in $N_2$ (300 cc/min)
Load: 98.0 mN

As described above, 0.5 wt% of zinc stearate was added to and mixed with a metal powder as a measurement object, the resulting mixture was filled in a cylinder of 7 mm in diameter, a punch was pushed into the cylinder from the top of the cylinder to apply a pressurized pressure of 1 ton/$cm^2$ maintained for 3 seconds, and thus, the metal powder was molded into a columnar shape of about 5 mm in height. The resulting compact was placed in a heating furnace under the conditions that the axis of the compact was arranged vertically, and a load of 98.0 mN was applied in the axial direction; and the change of the height of the compact (change as expansion/contraction) was automatically recorded while the compact was being continuously heated in a flow of 2 vol% $H_2$ in $N_2$ (flow rate: 300 cc/min), at a temperature increase rate of 5°C/min in a measurement range from 50 to 1000°C. The temperature at which, after the change (contraction) of the height of the compact started, the contraction rate of the compact reached 1% was taken as the "sintering initiation temperature." The measurement results of the sintering initiation temperature for the surface-treated metal powders of Examples and Comparative Examples are collected in Table 3.

[Analysis]

The amounts of Si, N, and C deposited on the surface of the surface-treated copper powders were analyzed under the following conditions. The results thus obtained are collected in Table 3.
Deposition amount Si: Each of the surface-treated metal powders was dissolve with an acid, Si was quantitatively determined with ICP (inductively coupled plasma atomic emission analysis method), the mass(μg) of the deposited Si in relation to the unit mass(g) of the surface-treated metal powder was determined.
N, C: Each of the metal powders was melted at a high temperature, and the deposition amounts of N and C were calculated from the generated amounts of $NO_2$ and $CO_2$, respectively, to measure the amounts of N and C deposited on the whole surface of the metal powder, and thus, the mass percentages (weight percentages) of the masses of the deposited N and C in relation to the mass of the surface-treated metal powder were determined.

[Production of Metal Powder Pastes]

Each of the surface-treated metal powders produced in Examples 2, 3, 5, 8, 9, 11, 12 and 14 and Comparative

Examples 1, 2, 5 and 7, the following fatty acid or the derivative thereof, and the following binder were dispersed in the following solvent to prepare 20 g of a metal powder paste. In this case, the mass ratio, surface-treated metal powder:solvent:binder:fatty acid or the derivative thereof (dispersant) was set at 51:46:2.5:0.5. In addition, in the case where no dispersant was added, the mass ratio, surface-treated metal powder:solvent:binder was set at 51:46.5:2.5. These metal powder pastes were used for the subsequent measurements, as Examples 15 to 22 and Comparative Examples 9 to 12, respectively.

Surface-treated copper powder of Example 2:

Treatment with diaminosilane at a silane concentration of 2 vol%

Surface-treated copper powder of Example 3:

Treatment with diaminosilane at a silane concentration of 4 vol%

Surface-treated copper powder of Example 5:

Treatment with diaminosilane at a silane concentration of 10 vol%

Surface-treated copper powder of Example 8:

Treatment with an amino group-containing titanate at a titanate concentration of 2 vol%

Surface-treated silver powder of Example 9:

Treatment with diaminosilane at a silane concentration of 2 vol%

Surface-treated silver powder of Example 11:

Treatment with an amino group-containing titanate at a titanate concentration of 2 vol%

Surface-treated nickel powder of Example 12:

Treatment with diaminosilane at a silane concentration of 2 vol%

Surface-treated nickel powder of Example 14:

Treatment with an amino group-containing titanate at a titanate concentration of 2 vol%

Surface-treated copper powder of Comparative Example 1: Only BTA treatment

Surface-treated copper powder of Comparative Example 2:

Treatment with an epoxysilane at a silane concentration of 2vol%

Surface-treated silver powder of Comparative Example 5:

Treatment with 3-phenylaminopropyltrimethoxysilane at a silane concentration of 2 vol%

Surface-treated nickel powder of Comparative Example 7:

Treatment with 3-phenylaminopropyltrimethoxysilane at a silane concentration of 2 vol%

Fatty acid: Oleic acid (C18, one double bond) Linoleic acid (C18, two double bonds)

Fatty acid derivative: Oleylamine (C18, one double bond)

Binder: Ethyl cellulose

Solvent: α-Terpineol (TPO) or butyl carbitol

On the basis of the above-described mixtures, the surface-treated copper powder, the fatty acid, the binder and the solvent were kneaded with a mixer, then the kneaded mixtures were allowed to pass through a triple roll mill, and thus pastes for internal electrodes were obtained.

[Measurement of Permeability in Filtration with Filter]

The copper powder pastes produced as described above were subjected to a filtration with a glass filter having a pore size of 5 μm under a reduced pressure of 0.2 atm, the permeation amounts(g) were measured immediately after the placement of the paste, and after 30 seconds, 8 minutes and 15 minutes from the placement of the paste, and the proportions of the measured permeation amounts in relation to the amount(g) initially placed on the filter were calculated in terms of percentage to derive the permeation percentages(%). The results obtained for Examples 9, 10 and 11, and Comparative Examples 5 and 6 (with and without a binder resin, respectively) are shown in Table 4.

[Flatness of Paste Coating Film]

The metal powder pastes obtained by the above-described procedures were applied to PET films by screen printing, and were dried at 120°C for 10 minutes in the air atmosphere. The application of the metal powder paste was performed so as for the thickness of each of the coating films after drying to be 5 μm.

The maximum height Rz of each of the obtained coating films was measured with a contact-type surface roughness meter (SE-3400, manufactured by Kosaka Laboratory Ltd.) according to JIS-B0601 with n=3, and the average value was derived.

These results are collected in Table 5 and Table 6.

To the copper powder paste of Comparative Example 1, 1 g of diaminosilane was added in relation to 20 g of the copper powder, and in the same manner as described above, the filter permeation percentages of the paste and the roughness of the coating film of the paste were evaluated.

[Table 1]

| | Metal powder | Coupling agent | Coupling agent concentration/vol % | Method for mixing and stirring with copper powder |
|---|---|---|---|---|
| Example 1 | Cu | Diaminosilane | 1 | Rotation + ultrasonic wave |
| Example 2 | | | 2 | Rotation + ultrasonic wave |
| Example 3 | | | 4 | Rotation + ultrasonic wave |
| Example 3R | | | 4 | Rotation |
| Example 3S | | | 4 | Ultrasonic wave |
| Example 4 | | | 6 | Rotation + ultrasonic wave |
| Example 5 | | | 10 | Rotation + ultrasonic wave |
| Example 6 | | Aminosilane | 2 | Rotation + ultrasonic wave |
| Example 7 | | Ureidosilane | 2 | Rotation + ultrasonic wave |
| Example 8 | | Titanate KR44 | 2 | Rotation + ultrasonic wave |
| Example 9 | Ag | Diaminosilane | 2 | Rotation + ultrasonic wave |
| Example 10 | | Ureidosilane | 2 | Rotation + ultrasonic wave |
| Example 11 | | Titanate KR44 | 2 | Rotation + ultrasonic wave |

(continued)

| | Metal powder | Coupling agent | Coupling agent concentration/vol % | Method for mixing and stirring with copper powder |
|---|---|---|---|---|
| Example 12 | Ni | Diaminosilane | 2 | Rotation + ultrasonic wave |
| Example 13 | | Ureidosilane | 2 | Rotation + ultrasonic wave |
| Example 14 | | Titanate KR44 | 2 | Rotation + ultrasonic wave |
| Comparative Example 1 | Cu | Blank material (only BTA treatment) | | |
| Comparative Example 2 | | Epoxysilane | 2 | Rotation + ultrasonic wave |
| Comparative Example 3 | | 3-Phenylaminopropyltrimethoxysilane | 2 | Rotation + ultrasonic wave |
| Comparative Example 4 | | Titanate TTS | 2 | Rotation + ultrasonic wave |
| Comparative Example 5 | Ag | 3-Phenylaminopropyltrimethoxysilane | 2 | Rotation + ultrasonic wave |
| Comparative Example 6 | | Titanate TTS | 2 | Rotation + ultrasonic wave |
| Comparative Example 7 | Ni | 3-Phenylaminopropyltrimethoxysilane | 2 | Rotation + ultrasonic wave |
| Comparative Example 8 | | Titanate TTS | 2 | Rotation + ultrasonic wave |

[Table 2]

| | Metal powder sizes | | | | | |
|---|---|---|---|---|---|---|
| | Before treatment | | | After treatment | | |
| | $D_{50}$/µm | $D_{max}$/µm | Distribution | $D_{50}$/µm | $D_{max}$/µm | Distribution |
| Example 1 | 0.12 | 0.28 | Single mountain | 0.12 | 0.29 | Single mountain |
| Example 2 | | | | 0.12 | 0.29 | Single mountain |
| Example 3 | | | | 0.12 | 0.30 | Single mountain |
| Example 3R | | | | 0.13 | 0.30 | Single mountain |
| Example 3S | | | | 0.13 | 0.29 | Single mountain |
| Example 4 | | | | 0.12 | 0.31 | Single mountain |
| Example 5 | | | | 0.13 | 0.33 | Single mountain |
| Example 6 | | | | 0.13 | 0.30 | Single mountain |
| Example 7 | | | | 0.14 | 0.32 | Single mountain |
| Example 8 | | | | 0.14 | 0.33 | Single mountain |

(continued)

| | Metal powder sizes | | | | | |
|---|---|---|---|---|---|---|
| | Before treatment | | | After treatment | | |
| | $D_{50}$/μm | $D_{max}$/μm | Distribution | $D_{50}$/μm | $D_{max}$/μm | Distribution |
| Example 9 | 0.10 | 0.50 | Single mountain | 0.11 | 0.51 | Single mountain |
| Example 10 | | | | 0.11 | 0.52 | Single mountain |
| Example 11 | | | | 0.12 | 0.51 | Single mountain |
| Example 12 | 0.17 | 0.51 | Single mountain | 0.19 | 0.53 | Single mountain |
| Example 13 | | | | 0.20 | 0.53 | Single mountain |
| Example 14 | | | | 0.22 | 0.55 | Single mountain |
| Comparative Example 1 | 0.12 | 0.28 | Single mountain | 0.18 | 0.40 | Single mountain |
| Comparative Example 2 | | | | 0.12 | 0.29 | Single mountain |
| Comparative Example 3 | | | | 0.14 | 0.35 | Single mountain |
| Comparative Example 4 | | | | 0.15 | 0.39 | Single mountain |
| Comparative Example 5 | 0.10 | 0.50 | Single mountain | 0.12 | 0.52 | Single mountain |
| Comparative Example 6 | | | | 0.14 | 0.56 | Single mountain |
| Comparative Example 7 | 0.17 | 0.51 | Single mountain | 0.19 | 0.56 | Single mountain |
| Comparative Example 8 | | | | 0.22 | 0.61 | Single mountain |

[Table 3]

| | Deposition amounts | | | Sintering initiation temperature/°C | Number of particles/μ$m^2$ of $SiO_2$ particles of 0.5 μm or more in diameter after $TMA^2$ | Presence or absence of $SiO_2$ particles of 10 nm or more in diameter after TMA |
|---|---|---|---|---|---|---|
| | Si /ppm | Ti /ppm | N /wt% | | | |
| Example 1 | 180 | - | 0.02 | 770 | 0.0 | Present |
| Example 2 | 290 | - | 0.04 | 800 | 0.0 | Present |
| Example 3 | 420 | - | 0.05 | 810 | 0.0 | Present |
| Example 3R | 410 | - | 0.04 | 810 | 0.0 | Present |
| Example 3S | 400 | - | 0.04 | 800 | 0.0 | Present |
| Example 4 | 460 | - | 0.05 | 820 | 0.1 | Present |
| Example 5 | 530 | - | 0.06 | 840 | 0.1 | Present |
| Example 6 | 300 | - | 0.05 | 820 | 0.0 | Present |
| Example 7 | 280 | - | 0.04 | 770 | 0.0 | Present |
| Example 8 | - | 320 | 0.05 | 790 | 0.0 | Present |
| Example 9 | 280 | - | 0.05 | 810 | 0.0 | Present |
| Example 10 | 220 | - | 0.04 | 790 | 0.0 | Present |
| Example 11 | - | 310 | 0.05 | 760 | 0.0 | Present |
| Example 12 | 270 | - | 0.05 | 810 | 0.0 | Present |
| Example 13 | 220 | - | 0.04 | 790 | 0.0 | Present |
| Example 14 | - | 290 | 0.05 | 780 | 0.0 | Present |

(continued)

| | Deposition amounts | | | Sintering initiation temperature/°C | Number of particles/ $\mu m^2$ of $SiO_2$ particles of 0.5 $\mu$m or more in diameter after TMA[2] | Presence or absence of $SiO_2$ particles of 10 nm or more in diameter after TMA |
|---|---|---|---|---|---|---|
| | Si /ppm | Ti /ppm | N /wt% | | | |
| Comparative Example 1 | - | - | 0.01 | 330 | - | - |
| Comparative Example 2 | 90 | - | 0.01 | 340 | 0.0 | Absent |
| Comparative Example 3 | 420 | - | 0.05 | 340 | 0.0 | Absent |
| Comparative Example 4 | - | 50 | 0.01 | 360 | 0.0 | Absent |
| Comparative Example 5 | 350 | - | 0.03 | 360 | 0.0 | Absent |
| Comparative Example 6 | - | 60 | 0.01 | 350 | 0.0 | Absent |
| Comparative Example 7 | 380 | - | 0.03 | 370 | 0.0 | Absent |
| Comparative Example 8 | - | 60 | 0.01 | 350 | 0.0 | Absent |

[Table 4]

| | Metal powder used | TPO | | | | | | | | | | | | Butyl carbitol | | |
|---|---|---|---|---|---|---|---|---|---|---|---|---|---|---|---|---|
| | | None | | | Oleic acid | | | Oleylamine | | | Linoleic acid | | | Oleic acid | | |
| | | 30 seconds | 8 minutes | 15 minutes | 30 seconds | 8 minutes | 15 minutes | 30 seconds | 8 minutes | 15 minutes | 30 seconds | 8 minutes | 15 minutes | 30 seconds | 8 minutes | 15 minutes |
| Example 15 | Example 2 | 41 | 62 | 71 | 64 | 90 | 92 | 71 | 89 | 92 | 51 | 62 | 65 | 62 | 87 | 90 |
| Example 16 | Example 3 | 42 | 63 | 72 | 70 | 90 | 93 | 74 | 91 | 94 | 60 | 64 | 71 | 65 | 88 | 93 |
| Example 17 | Example 5 | 42 | 64 | 73 | 71 | 91 | 94 | 73 | 91 | 93 | 61 | 66 | 73 | 66 | 89 | 92 |
| Example 18 | Example 8 | 41 | 62 | 72 | 63 | 88 | 91 | 71 | 87 | 90 | 53 | 69 | 72 | 63 | 87 | 91 |
| Example 19 | Example 9 | 40 | 60 | 72 | 62 | 78 | 87 | 68 | 78 | 87 | 51 | 64 | 72 | 62 | 76 | 88 |
| Example 20 | Example 11 | 41 | 63 | 71 | 63 | 80 | 83 | 69 | 78 | 89 | 52 | 67 | 71 | 61 | 75 | 90 |
| Example 21 | Example 12 | 41 | 61 | 71 | 62 | 80 | 83 | 66 | 76 | 86 | 52 | 66 | 71 | 62 | 75 | 87 |
| Example 22 | Example 14 | 41 | 62 | 72 | 60 | 79 | 84 | 68 | 79 | 88 | 50 | 65 | 72 | 62 | 75 | 87 |
| Comparative Example 9 | Comparative Example 1 | 0* | 0* | 0* | 0* | 0* | 0* | 0* | 0* | 0* | 0* | 0* | 0* | 0* | 0* | 0* |
| Comparative Example 10 | Comparative Example 2 | 0* | 0* | 3 | 0* | 3 | 7 | 0* | 2 | 5 | 0* | 0* | 3 | 0* | 0* | 2 |
| Comparative Example 11 | Comparative Example 5 | 0* | 0* | 2 | 0* | 2 | 6 | 0* | 0* | 3 | 0* | 0* | 3 | 0* | 0* | 0* |
| Comparative Example 12 | Comparative Example 7 | 0* | 0* | 0* | 0* | 0* | 3 | 0* | 0* | 3 | 0* | 0* | 0* | 0* | 0* | 0* |
| Comparative Example 13 | Comparative Example 1 | 0* | 0* | 0* | 0* | 0* | 0* | 0* | 0* | 0* | 0* | 0* | 0* | 0* | 0* | 0* |

[Table 5]

| | Metal powder used | Rz of coating film/μm | | | | | | | |
|---|---|---|---|---|---|---|---|---|---|
| | | TPO | | | | Butyl carbitol | | | |
| | | None | Oleic acid | Oleylamine | Linoleic acid | None | Oleic acid | Oleylamine | Linoleic acid |
| Example 15 | Example 2 | 0.92 | 0.42 | 0.41 | 0.56 | 0.95 | 0.44 | 0.42 | 0.64 |
| Example 16 | Example 3 | 0.88 | 0.41 | 0.39 | 0.62 | 0.92 | 0.42 | 0.40 | 0.70 |
| Example 17 | Example 5 | 0.93 | 0.45 | 0.42 | 0.66 | 0.95 | 0.48 | 0.46 | 0.73 |
| Example 18 | Example 8 | 1.2 | 0.53 | 0.51 | 0.69 | 1.2 | 0.59 | 0.54 | 0.73 |
| Example 19 | Example 9 | 1.6 | 1.1 | 1.1 | 1.3 | 1.6 | 1.2 | 1.1 | 1.3 |
| Example 20 | Example 11 | 2.0 | 1.3 | 1.1 | 1.4 | 2.1 | 1.3 | 1.2 | 1.7 |
| Example 21 | Example 12 | 1.9 | 1.2 | 1.1 | 1.6 | 1.9 | 1.2 | 1.2 | 1.6 |
| Example 22 | Example 14 | 2.1 | 1.3 | 1.3 | 1.8 | 2.2 | 1.3 | 1.2 | 1.8 |
| Comparative Example 9 | Comparative Example 1 | 7.4 | 5.3 | 5.1 | 6.0 | 7.7 | 5.3 | 5.2 | 6.0 |
| Comparative Example 10 | Comparative Example 2 | 7.2 | 5.5 | 5.1 | 6.3 | 7.3 | 5.5 | 5.2 | 6.2 |
| Comparative Example 11 | Comparative Example 5 | 8.7 | 6.5 | 6.3 | 7.3 | 8.6 | 6.3 | 6.1 | 7.1 |
| Comparative Example 12 | Comparative Example 7 | 8.2 | 6.2 | 6.0 | 7.4 | 8.1 | 6.3 | 6.1 | 7.2 |
| Comparative Example 13 | Comparative Example 1 | 7.1 | 5.6 | 5.4 | 7.3 | 7.2 | 5.8 | 5.4 | 7.4 |

[Table 6]

| | Metal powder used | Rz of coating film/Dmax | | | | | | | |
|---|---|---|---|---|---|---|---|---|---|
| | | TPO | | | | Butyl carbitol | | | |
| | | None | Oleic acid | Oleylamine | Linoleic acid | None | Oleic acid | Oleylamine | Linoleic acid |
| Example 15 | Example 2 | 3.2 | 1.4 | 1.4 | 1.9 | 3.3 | 1.5 | 1.4 | 2.2 |
| Example 16 | Example 3 | 2.9 | 1.4 | 1.3 | 2.1 | 3.1 | 1.4 | 1.3 | 2.3 |
| Example 17 | Example 5 | 2.8 | 1.4 | 1.3 | 2.0 | 2.9 | 1.5 | 1.4 | 2.2 |
| Example 18 | Example 8 | 3.5 | 1.6 | 1.5 | 2.1 | 3.7 | 1.8 | 1.6 | 2.2 |
| Example 19 | Example 9 | 3.2 | 2.2 | 2.1 | 2.6 | 3.2 | 2.3 | 2.2 | 2.6 |
| Example 20 | Example 11 | 3.8 | 2.5 | 2.1 | 2.8 | 4.1 | 2.6 | 2.4 | 3.3 |
| Example 21 | Example 12 | 3.6 | 2.2 | 2.2 | 3.1 | 3.6 | 2.2 | 2.2 | 3.1 |
| Example 22 | Example 14 | 3.7 | 2.4 | 2.3 | 3.2 | 3.9 | 2.3 | 2.3 | 3.2 |
| Comparative Example 9 | Comparative Example 1 | 18 | 13 | 13 | 15 | 19 | 13 | 13 | 15 |
| Comparative Example 10 | Comparative Example 2 | 25 | 19 | 18 | 22 | 25 | 19 | 18 | 21 |
| Comparative Example 11 | Comparative Example 5 | 17 | 13 | 12 | 14 | 17 | 12 | 12 | 14 |
| Comparative Example 12 | Comparative Example 7 | 15 | 11 | 11 | 13 | 15 | 11 | 11 | 13 |
| Comparative Example 13 | Comparative Example 1 | 18 | 14 | 14 | 18 | 18 | 14 | 13 | 18 |

Also in an experiment using ureidosilane ($H_2N-CO-NH-(CH_2)_3-Si(OCH_2CH_3)_3$) as a coupling agent having an amino group at the molecular terminal, the excellent effects of the present invention have been verified.

Industrial Applicability

According to the present invention, it is possible to produce a metal powder paste excellent in sintering delay property and dispersibility. The metal powder paste according to the present invention can be suitably used for the production of the electrodes for multilayer ceramic capacitors (chip laminated ceramic capacitors). The present invention is an industrially useful invention.

## Claims

1. A method for producing a metal powder paste comprising:

   a step of producing a surface-treated metal powder including 100 to 1000 μg of one or more of Si, Ti, Al, Zr, Ce and Sn in relation to 1 g of the metal powder, wherein the surface-treated metal powder has a weight percentage of N of 0.02% or more in relation to the metal powder, and has a particle size distribution as measured by laser diffraction with a $D_{50}$ value of 0.5 μm or less and a $D_{max}$ value of 1.0 μm or less, by performing:

   a sub-step of preparing a metal powder dispersion liquid by mixing the metal powder with an aqueous solution of an amino group-containing coupling agent containing one or more of Si, Ti, Al, Zr, Ce and Sn,
   a sub-step of collecting as a residue the metal powder from the metal powder dispersion liquid, and
   a sub-step of washing the metal powder collected as a residue with an aqueous solvent; and

   a step of preparing the paste including dispersing in a further solvent the surface-treated metal powder, and a carboxyl group- or amino group-containing organic compound.

2. The method according to claim 1 wherein the sub-step of washing the collected metal powder as a residue with an aqueous solvent is performed until the concentration of one element selected from the group consisting of Si, Ti, Al, Zr, Ce and Sn reaches 50ppm or less, detected by ICP analysis, in the filtrate obtained after adding an aqueous solvent having a mass five times the dry mass of the metal powder after washing.

3. The method according to claim 1 or 2 wherein the step of preparing the paste is performed by dispersing in the solvent a binder resin in addition to the surface-treated metal powder, and the carboxyl group- or amino group-containing organic compound.

4. The method according to any one of claims 1 to 3 wherein the carboxyl group-containing organic compound is a fatty acid or an amino acid.

5. The method according to any one of claims 1 to 4 wherein the amino group-containing organic compound is an aliphatic amine.

## Patentansprüche

1. Verfahren zur Herstellung einer Metallpulverpaste, wobei das Verfahren Folgendes umfasst:

   einen Schritt der Herstellung eines oberflächenbehandelten Metallpulvers, das 100 bis 1000 μg von einem oder mehreren von Si, Ti, Al, Zr, Ce und Sn bezogen auf 1 g Metallpulver umfasst, wobei das oberflächenbehandelte Metallpulver einen Gewichtsanteil von N von 0,02 % oder mehr bezogen auf das Metallpulver aufweist und eine mittels Laserbeugung gemessene Teilchengrößenverteilung mit einem $D_{50}$-Wert von 0,5 μm oder weniger und einem $D_{max}$-Wert von 1,0 μm oder weniger aufweist, durch das Durchführen:

   eines untergeordneten Schritts des Herstellens einer Metallpulverdispersionsflüssigkeit durch das Mischen des Metallpulvers mit einer wässrigen Lösung eines Aminogruppe-hältigen Bindemittels, das ein oder mehrere aus Si, Ti, Al, Zr, Ce und Sn enthält,
   eines untergeordneten Schritts des Gewinnens des Metallpulvers als Rückstand aus der Metallpulverdispersionsflüssigkeit und
eines untergeordneten Schritts des Waschens des als Rückstand gewonnenen Metallpulvers mit einem wässrigen Lösungsmittel, sowie

einen Schritt des Herstellens der Paste, der das Dispergieren des oberflächenbehandelten Metallpulvers und einer Carboxyl- oder Aminogruppen-hältigen organischen Verbindung in einem weiteren Lösungsmittel umfasst.

**2.** Verfahren nach Anspruch 1, wobei der untergeordnete Schritt des Waschens des als Rückstand gewonnenen Metallpulvers mit einem wässrigen Lösungsmittel durchgeführt wird, bis die mittels ICP-Analyse detektierte Konzentration von einem aus der aus Si, Ti, Al, Zr, Ce und Sn bestehenden Gruppe ausgewählten Element in dem nach dem Zusetzen eines wässrigen Lösungsmittels mit einer fünfmal höheren Masse als der Trockenmasse des Metallpulvers nach dem Waschen erhaltenen Filtrat 50 ppm oder weniger beträgt.

**3.** Verfahren nach Anspruch 1 oder 2, wobei der Schritt des Herstellens der Paste durch das Dispergieren eines Bindemittelharzes zusätzlich zu dem oberflächenbehandelten Metallpulver und der Carboxyl- oder Aminogruppen-hältigen organischen Verbindung in dem Lösungsmittel durchgeführt wird.

**4.** Verfahren nach einem der Ansprüche 1 bis 3, wobei die Carboxylgruppen-hältige organische Verbindung eine Fettsäure oder eine Aminosäure ist.

**5.** Verfahren nach einem der Ansprüche 1 bis 4, wobei die Aminogruppen-hältige organische Verbindung ein aliphatisches Amin ist.

## Revendications

**1.** Procédé de production d’une pâte de poudre métallique comprenant :

une étape de production d’une poudre métallique traitée en surface incluant de 100 à 1 000 μg d’un ou plusieurs du Si, du Ti, de l’Al, du Zr, du Ce et du Sn par rapport à 1 g de la poudre métallique, dans laquelle la poudre métallique traitée en surface a un pourcentage en poids de N de 0,02 % ou plus par rapport à la poudre métallique, et a une répartition de la taille de particule telle que mesurée par diffraction laser ayant une valeur $D_{50}$ de 0,5 μm ou moins et une valeur $D_{max}$ de 1,0 μm ou moins, en réalisant :

une sous-étape de préparation d’un liquide de dispersion de poudre métallique par mélange de la poudre métallique avec une solution aqueuse d’un agent de couplage contenant un groupe amino contenant un ou plusieurs du Si, du Ti, de l’Al, du Zr, du Ce et du Sn,
une sous-étape de collecte en tant que résidu de la poudre métallique à partir du liquide de dispersion de poudre métallique, et
une sous-étape de lavage de la poudre métallique collectée en tant que résidu avec un solvant aqueux ; et

une étape de préparation de la pâte incluant la dispersion dans un autre solvant de la poudre métallique traitée en surface, et d’un composé organique contenant un groupe carboxyle ou un groupe amino.

**2.** Procédé selon la revendication 1 dans lequel la sous-étape de lavage de la poudre métallique collectée en tant que résidu avec un solvant aqueux est réalisée jusqu’à ce que la concentration d’un élément choisi dans le groupe constitué du Si, du Ti, de l’Al, du Zr, du Ce et du Sn atteigne 50 ppm ou moins, détecté par analyse ICP, dans le filtrat obtenu après ajout d’un solvant aqueux ayant une masse égale à cinq fois la masse sèche de la poudre métallique après lavage.

**3.** Procédé selon la revendication 1 ou 2 dans lequel l’étape de préparation de la pâte est réalisée par dispersion dans le solvant d’une résine liante outre la poudre métallique traitée en surface, et le composé organique contenant un groupe carboxyle ou un groupe amino.

**4.** Procédé selon l’une quelconque des revendications 1 à 3 dans lequel le composé organique contenant un groupe carboxyle est un acide gras ou un acide aminé.

**5.** Procédé selon l’une quelconque des revendications 1 à 4 dans lequel le composé organique contenant un groupe

amino est une amine aliphatique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4001438 B
- JP 4164009 B
- JP 3646259 B
- JP 2012140661 A
- JP 4588688 B
- JP 4356323 B
- JP H07197103 B
- JP H0428109 B
- JP 2001059101 A
- EP 2130627 A1
- JP 2007291513 A
- JP 2010059467 A